# EUROPEAN PATENT SPECIFICATION

(11) **EP 4 220 106 B1**
(45) Date of publication and mention of the grant of the patent: **25.11.2026**
(21) Application number: 21872205.6
(22) Date of filing: 10.09.2021
(51) Int. Cl.: G01J 5/00, G01J 5/48, G01J 5/02, A47J 37/10, F24C 7/04, A47J 36/32, F24C 7/08, G06F 30/17, G06F 30/20

(54) **INFORMATION PROCESSING DEVICE, INFORMATION PROCESSING METHOD, AND PROGRAM**
INFORMATIONSVERARBEITUNGSVORRICHTUNG, INFORMATIONSVERARBEITUNGSVERFAHREN UND PROGRAMM
DISPOSITIF DE TRAITEMENT D'INFORMATIONS, PROCÉDÉ DE TRAITEMENT D'INFORMATIONS ET PROGRAMME

(30) Priority: 25.09.2020 JP 2020161384
(43) Date of publication of application: 02.08.2023
(73) Proprietor: Ajiwow Inc., Tokyo 104-0031 (JP)
(72) Inventor: MURAKAMI, Tadayoshi, Tokyo 108-0075 (JP); SHIGA, Daizo, Tokyo 108-0075 (JP); INOUE, Junki, Tokyo 108-0075 (JP)
(74) Representative: D Young & Co LLP
(86) International application number: PCT/JP2021/033273
(87) International publication number: WO 2022/065074

(56) References cited:
- EP-B1- 2 026 632
- WO-A1-2019/059209
- JP-A- 2008 251 193
- JP-A- 2009 140 638
- JP-A- 2010 508 493
- JP-A- 2015 206 502
- JP-A- 2017 517 322
- JP-A- 2020 091 217
- JP-A- 2020 139 866
- JP-A- H0 815 037
- US-A1- 2020 182 610
- US-A1- 2020 292 392
- US-B2- 8 360 633

## Description

### TECHNICAL FIELD

The present technology relates to an information processing apparatus, an information processing method, and a program, and particularly relates to an information processing apparatus, an information processing method, and a program capable of appropriately estimating an internal temperature of a food material being heated.

### BACKGROUND ART

When a lump of meat such as steak meat is cooked in a frying pan, it is very difficult to accurately control a degree of cooking inside the food material. A skilled chef has a skill of pressing meat with fingers during heating to judge a degree of cooking of the inside, but there is a case where he/she cannot always make a perfect judgement with respect to a food material having a large individual difference, and thus cannot cook as intended.

Some of recent cooking utensils have a function of performing temperature control by heating meat in a state of inserting a probe of a thermometer into the meat. However, it is not preferable since there is a risk in terms of hygiene and leakage of meat juice. Not limited to the meat, there is a high need for a technique for measuring a temperature inside a food material in a non-destructive manner during cooking, and such a technique is strongly demanded by an armature cook and a professional cook who pursues an accurate finish.

Under such a background, many techniques for estimating an internal temperature of a food material during heating have been proposed. For example, Patent Document 1 proposes a technique in which sensors for measuring a shape and a surface temperature of an object are arranged on a top surface and a side surface in a cooker, a three-dimensional model is configured on the basis of the shape of the object, and an internal temperature of the object is estimated by thermal conduction analysis by a boundary element method.

### CITATION LIST

### PATENT DOCUMENTS

Patent Document 1: Japanese Patent Application Laid-Open No. H8-15037
Patent Document 2: Japanese Translation of PCT Publication No. 2010-508493
Patent Document 3: Japanese Patent Application Laid-Open No. 2015-206502
Patent Document 4: Japanese Patent Application Laid-Open No. 2019-200002
Patent Document 5: EP 2 026 632 B1 discusses a method for determining core temperature of cooked food and a cooking device to perform this function.
Patent Document 6: US 8 360 633 B2 discusses a device and method for determining the temperature inside an item to be cooked.
Patent Document 7: US 2020/182610 A1 discusses a heating cooker including a three dimensional measuring device.

### SUMMARY OF THE INVENTION

### PROBLEMS TO BE SOLVED BY THE INVENTION

In the technique of Patent Document 1, it is not assumed to measure (estimate) a temperature on a bottom surface side that cannot be directly detected by a temperature sensor. Therefore, the technique described in Patent Document 1 is not suitable for cooking in a frying pan and the like.

The present technology has been made in view of such a situation, and an object thereof is to appropriately estimate an internal temperature of a food material being heated.

### SOLUTIONS TO PROBLEMS

The present invention provides an apparatus according to claim 1, a method according to claim 13 and a computer program according to claim 14.

An information processing apparatus according tc one aspect of the present technology, includes: a construction unit that constructs a three-dimensional model representing a shape and a temperature distribution of a cooking object on the basis of sensor data acquired by sensors that measure states of a cooking utensil and the cooking object; and an internal temperature estimation unit that estimates an internal temperature of the cooking object by performing thermal conduction analysis based on the three-dimensional model.

In one aspect of the present technology, a three-dimensional model representing a shape and a temperature distribution of a cooking object is constructed on the basis of sensor data acquired by sensors that measure states of a cooking utensil and the cooking object, and an internal temperature of the cooking object is estimated by performing thermal conduction analysis based on the three-dimensional model.

### BRIEF DESCRIPTION OF DRAWINGS

Fig. 1 is a diagram illustrating a configuration example of a cooking assistance system according to an embodiment of the present technology.
Fig. 2 is a block diagram illustrating a configuration of the cooking assistance system.
Fig. 3 is a block diagram illustrating a functional configuration example of a calculation unit.
Fig. 4 is a flowchart for explaining processing of an information processing apparatus.
Fig. 5 is a flowchart for explaining position and shape recognition processing performed in step S2 of Fig. 4.
Fig. 6 is a diagram illustrating an example of contour extraction.
Fig. 7 is a cross-sectional view illustrating an example of a method for constructing a three-dimensional model of a cooking object.
Fig. 8 is a cross-sectional view illustrating the example of the method for constructing the three-dimensional model of the cooking object.
Fig. 9 is a flowchart for explaining surface temperature extraction processing performed in step S3 of Fig. 4.
Fig. 10 is a diagram illustrating an example of a three-dimensional model of a cooking object.
Fig. 11 is a diagram illustrating an example of temperature extraction of a heating medium.
Fig. 12 is a diagram illustrating an example of temperature extraction of the heating medium.
Fig. 13 is a flowchart for explaining thermal conduction characteristic estimation processing performed in step S5 of Fig. 4.
Fig. 14 is a diagram illustrating an example of thermal images before and after steak meat cooked in a frying pan is flipped over.
Fig. 15 is a flowchart for explaining internal temperature estimation processing performed in step S6 of Fig. 4.
Fig. 16 is a cross-sectional view illustrating an example of reconstruction of a three-dimensional model.
Fig. 17 is a diagram illustrating an example of a thermal conduction model.
Fig. 18 is a graph showing an example of a measurement result of a temperature change of an exposed surface after steak meat cooked in a frying pan is flipped over.
Fig. 19 is a graph showing an example of a measurement result of a temperature change of the frying pan after heating is stopped.
Fig. 20 is a block diagram illustrating a configuration example of hardware of a computer.

### MODE FOR CARRYING OUT THE INVENTION

### <Outline of Present Technology>

The present technology supports appropriate control of a heating state of a cooking object in a cooking method in which the cooking object is brought into contact with a heating medium and heated by thermal conduction.

Hereinafter, a mode for carrying out the present technology will be described. Note that the description will be given in the following order.
1. Cooking Assistance System
2. Configuration of Each Device
3. Operation of Information Processing Apparatus
4. Others

### <<1. Cooking Assistance System>>

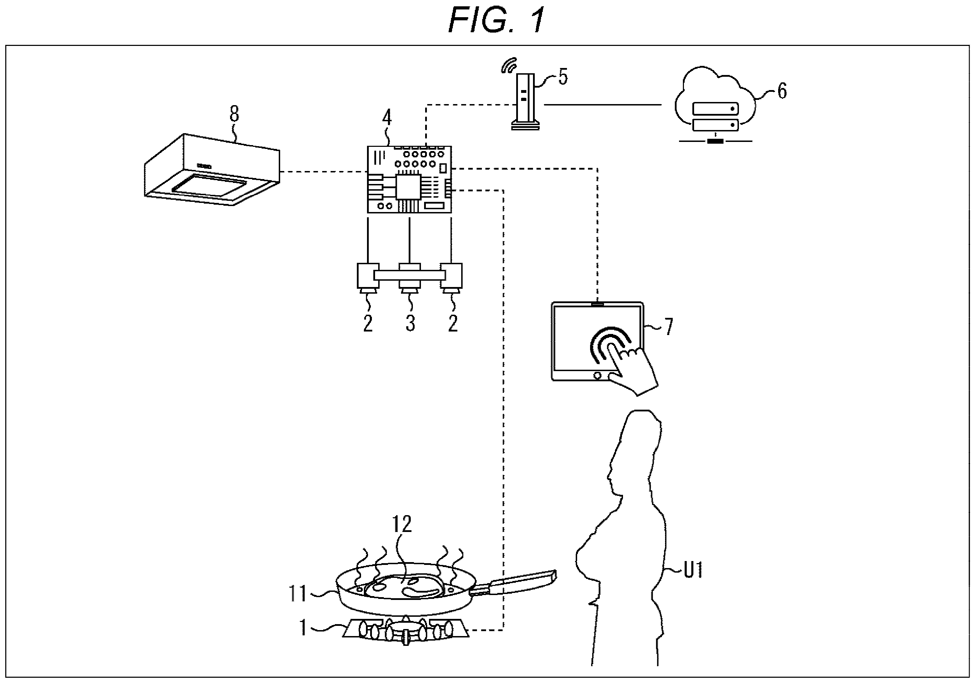

Fig. 1 is a diagram illustrating a configuration example of a cooking assistance system according to an embodiment of the present technology.

The cooking assistance system of the present technology is used, for example, in a scene where a cook U1 cooks steak meat as a cooking object 12 using a frying pan as a cooking utensil 11.

The cooking assistance system in Fig. 1 includes a heating device 1, a stereo camera 2, a thermographic camera 3, a processor module 4, a network device 5, a server 6, an information terminal 7, and an air conditioner 8.

The heating device 1 includes a cooking stove, an IH cooker, or the like for heating the cooking utensil 11. The heating device 1 is installed in a work area where the cooking object 12 is cooked in the cooking utensil 11.

A camera sensor including the stereo camera 2 and the thermographic camera 3 is installed, for example, above the work area as a position where the work area including the cooking utensil 11 and the cooking object 12 can be seen. In a general kitchen environment, for example, the camera sensor is attached near a ventilation opening installed above the heating device 1.

The stereo camera 2 images the work area and acquires a visible image including depth information. The thermographic camera 3 images the work area and acquires a thermal image. The camera sensor is connected with the processor module 4 installed in a predetermined place such as in the same kitchen environment by a highspeed interface, and transmits and receives data to and from the processor module 4 in real time.

The processor module 4 is connected with the server 6 via the network device 5. The processor module 4 performs information processing in cooperation with the server 6 to estimate an internal temperature of the cooking object 12. Furthermore, the processor module 4 automatically adjusts heating power of the heating device 1, automatically adjusts air conditioning by the air conditioner 8, and presents information to the cook U1 by the information terminal 7 according to a heating state of the cooking object 12.

As indicated by broken lines, data is transmitted and received between the processor module 4 and each of the heating device 1, the network device 5, the information terminal 7, and the air conditioner 8 by, for example, wireless communication.

The server 6 is a server on an intranet or the Internet.

The information terminal 7 includes a smartphone, a tablet terminal, or the like having a display such as a liquid crystal display (LCD). The information terminal 7 placed near the cook U1 or the like detects an operation of the cook U1 and receives an input of information. The information terminal 7 performs information presentation and the like to the cook U1 according to control by the processor module **4.**

The air conditioner 8 adjusts air conditioning of the kitchen environment according to control by the processor module **4.**

### <<2. Configuration of Each Device>>

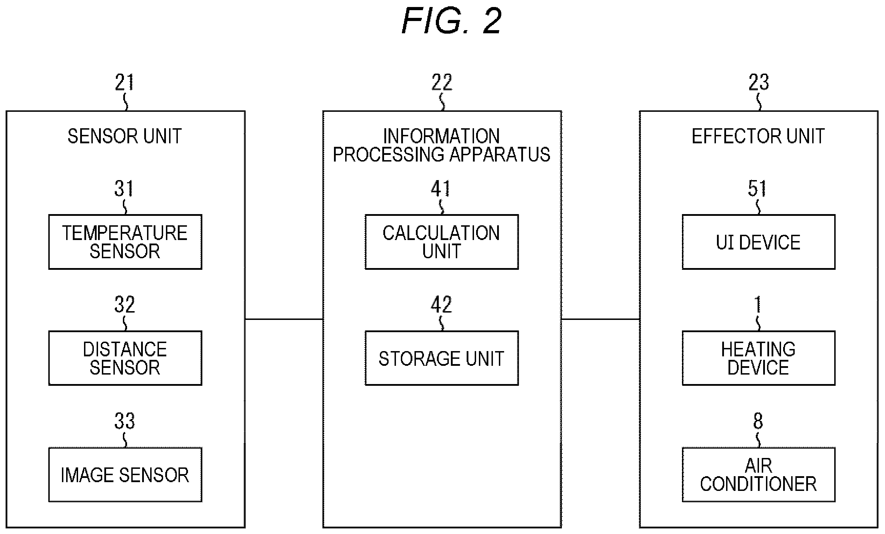

Fig. 2 is a block diagram illustrating a configuration of the cooking assistance system.

The cooking assistance system in Fig. 2 includes a sensor unit 21, an information processing apparatus 22, and an effector unit 23.

Note that the processing unit illustrated in Fig. 2 illustrates a logical configuration of functions, and does not limit a physical device configuration. One processing unit may include a plurality of physical devices. Furthermore, one physical device may constitute a plurality of processing units. Specific configurations of an interface that connects the inside of each processing unit and an interface that connects the processing units are not limited. A communication path between the processing units may be configured in a wired or wireless manner, or the communication path may include the Internet.

The sensor unit 21 includes a temperature sensor 31, a distance sensor 32, and an image sensor 33. For example, the temperature sensor 31, the distance sensor 32, and the image sensor 33 are constituted by the camera sensor including the stereo camera 2 and the thermographic camera 3.

The temperature sensor 31 is a sensor that measures a surface temperature distribution of an object. The distance sensor 32 is a sensor that measures a three-dimensional shape of an object. The image sensor 33 is a sensor that captures an image of an object in a visible light region.

Each sensor of the sensor unit 21 is handled separately as a logical function, but is not necessarily configured by three corresponding physical devices. Hereinafter, these three sensors are appropriately collectively referred to as a basic sensor group.

Each sensor of the basic sensor group measures a state of an object in a non-contact and non-destructive manner, and transmits a measurement result as time-series data to the information processing apparatus 22. An internal parameter and an external parameter of each sensor are calculated by so-called camera calibration, and pixels between the sensors can be associated with each other by coordinate transformation. In other words, data measured by the basic sensor group can be expressed by a common three-dimensional coordinate system (world coordinates) in the information processing apparatus 22.

The information processing apparatus 22 includes a calculation unit 41 and a storage unit 42. For example, the information processing apparatus 22 is configured by the processor module 4.

The calculation unit 41 includes, for example, a general-purpose calculator such as a CPU, a GPU, or a DSP, or a dedicated calculator specialized for AI-related processing or the like. The calculation unit 41 estimates a three-dimensional shape, a surface temperature, and a thermal conduction characteristic of the cooking object 12 on the basis of information measured by the sensor unit 21 and known information held in the storage unit 42, and estimates an internal temperature of the cooking object 12 by thermal conduction analysis using a three-dimensional model.

The storage unit 42 includes a storage device such as a memory and a storage. The storage unit 42 holds known information such as a database representing thermal conduction characteristics of the cooking object 12.

Note that the information processing apparatus 22 may be configured by a combination of the local processor module 4 and the server 6 on the network.

The effector unit 23 is a peripheral device controlled by the information processing apparatus 22 to control a cooking state. Note that the effector unit 23 also includes an input device that is not included in the sensor unit 21 and is related to information input by a cook, an information terminal used by a user in a remote place away from the work area, and the like.

The effector unit 23 includes, for example, a UI device 51, the heating device 1, and the air conditioner 8. The UI device 51 includes the information terminal 7 in Fig. 1, a PC, and the like. The effector unit 23 performs automatic control of a heating operation and information presentation to a user.

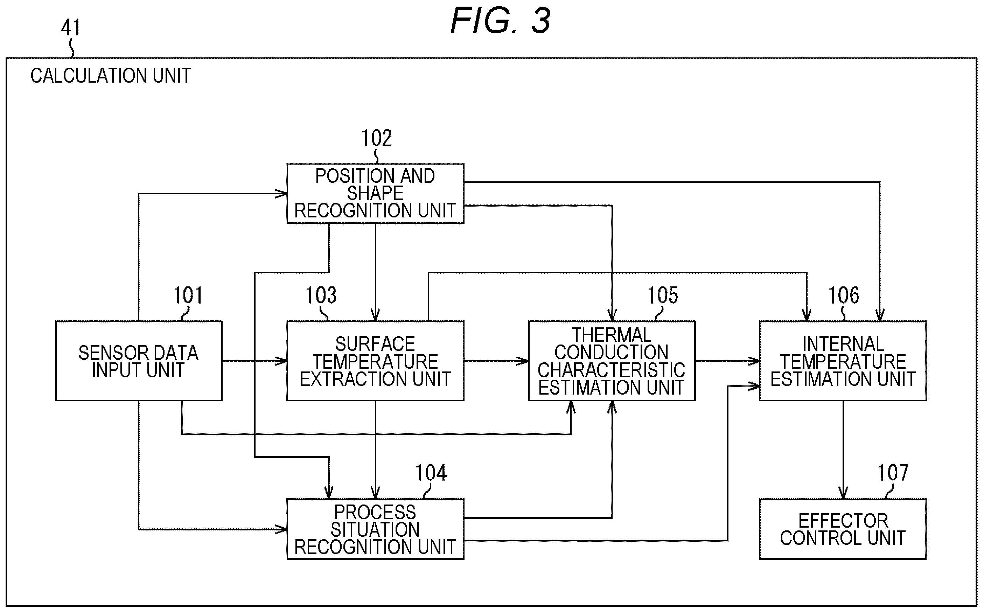

Fig. 3 is a block diagram illustrating a functional configuration example of the calculation unit 41.

As illustrated in Fig. 3, a sensor data input unit 101, a position and shape recognition unit 102, a surface temperature extraction unit 103, a process situation recognition unit 104, a thermal conduction characteristic estimation unit 105, an internal temperature estimation unit 106, and an effector control unit 107 are realized in the calculation unit 41. Details of a function of each processing unit will be described later.

The sensor data input unit 101 receives sensor data transmitted from the sensor unit 21, and outputs the sensor data to the position and shape recognition unit 102, the surface temperature extraction unit 103, the process situation recognition unit 104, and the thermal conduction characteristic estimation unit 105.

The position and shape recognition unit 102 recognizes a position and a shape of the cooking object 12 on the basis of the sensor data supplied from the sensor data input unit 101. For example, the position and shape recognition unit 102 detects shielding of a field of view due to cooking work of a cook.

Furthermore, the position and shape recognition unit 102 performs detection and contour extraction of the cooking utensil 11 and the cooking object 12. The position and shape recognition unit 102 performs shape recognition of the cooking object 12 and construction of a three-dimensional model thereof. The three-dimensional model of the cooking object 12 is a model representing a shape and a temperature distribution of the cooking object 12. A recognition result by the position and shape recognition unit 102 is supplied to the surface temperature extraction unit 103, the process situation recognition unit 104, the thermal conduction characteristic estimation unit 105, and the internal temperature estimation unit 106.

The surface temperature extraction unit 103 extracts surface temperatures of the cooking object 12 and the heating medium on the basis of the sensor data supplied from sensor data input unit 101 and contour information of the cooking object 12 and the heating medium supplied from the position and shape recognition unit 102. An extraction result of the surface temperatures by the surface temperature extraction unit 103 is supplied to the process situation recognition unit 104, the thermal conduction characteristic estimation unit 105, and the internal temperature estimation unit 106.

The process situation recognition unit 104 recognizes a situation of a cooking process on the basis of the sensor data supplied from the sensor data input unit 101, the position and shape of the cooking object 12 supplied from the position and shape recognition unit 102, and the extraction result of the surface temperatures supplied from the surface temperature extraction unit 103. Specifically, the process situation recognition unit 104 detects input, removal, a shape change, a position/posture change, and the like of the cooking object 12. A recognition result by the process situation recognition unit 104 is supplied to the thermal conduction characteristic estimation unit 105 and the internal temperature estimation unit 106.

The thermal conduction characteristic estimation unit 105 estimates a thermal conduction characteristic of the cooking object 12 on the basis of the sensor data supplied from the sensor data input unit 101 and the position and shape of the cooking object 12 supplied from the position and shape recognition unit 102 according to the situation of the cooking process recognized by the process situation recognition unit 104. Specifically, the thermal conduction characteristic estimation unit 105 estimates a physical property value of the cooking object 12.

Furthermore, the thermal conduction characteristic estimation unit 105 estimates contact thermal resistance between the cooking object 12 and the heating medium on the basis of the contour information of the cooking object 12 supplied from the position and shape recognition unit 102 and the extraction result of the surface temperatures by the surface temperature extraction unit 103. Information indicating the contact thermal resistance estimated by the thermal conduction characteristic estimation unit 105 is supplied to the internal temperature estimation unit 106.

The internal temperature estimation unit 106 estimates a temperature of a portion to be heated of the cooking object 12 on the basis of the information supplied from the thermal conduction characteristic estimation unit 105. According to the situation of the cooking process recognized by the process situation recognition unit 104, an internal temperature of the cooking object 12 is estimated on the basis of the three-dimensional model of the cooking object 12 in which the temperature of the portion to be heated has been set. An estimation result of the internal temperature by the internal temperature estimation unit 106 is supplied to the effector control unit 107.

The effector control unit 107 controls the effector unit 23 on the basis of the estimation result of the internal temperature by the internal temperature estimation unit 106. The effector control unit 107 controls the heating device 1, controls information presentation to a cook, and the like.

### <<3. Operation of Information Processing Apparatus>>

### <Overall Processing>

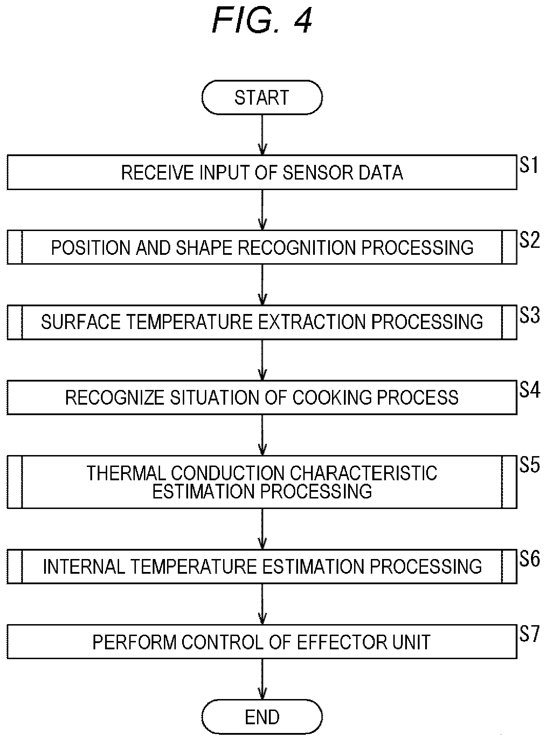

Processing of the information processing apparatus 22 having the above configuration will be described with reference to a flowchart of Fig. 4.

The flowchart of Fig. 4 illustrates main processing contents in series as one embodiment. The processing of each step is not necessarily executed in order illustrated in Fig. 4. Some processing is performed only under a certain condition.

In step S1, the sensor data input unit 101 receives an input of sensor data from each sensor of the sensor unit 21. A thermal image representing a surface temperature is input from the temperature sensor 31, and an RGB image as a visible image is input from the distance sensor 32. Furthermore, a depth image as depth information is input from the image sensor 33.

Each sensor data is time-series data captured in real time, and is input to the sensor data input unit 101 at an arbitrary timing. In order to simplify the description, it is assumed below that all pieces of sensor data are input in synchronization at a constant cycle.

Note that a series of processing described with reference to the flowchart of Fig. 4 is periodically and repeatedly executed every time new sensor data is received. For example, in a case where a frame rate of the sensor data is 30 fps, the series of processing is completed within approximately 33 ms.

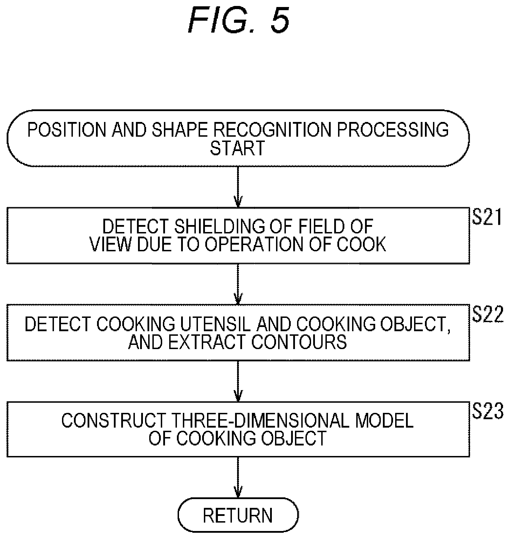

In step S2, the position and shape recognition unit 102 performs position and shape recognition processing. In the position and shape recognition processing, cooking work of a cook is detected, and a position, a contour, and a shape of the cooking object 12 are recognized. Furthermore, a three-dimensional model of the cooking object 12 is constructed on the basis of the recognition result of the position and shape of the cooking object 12. Details of the position and shape recognition processing will be described later with reference to a flowchart of Fig. 5.

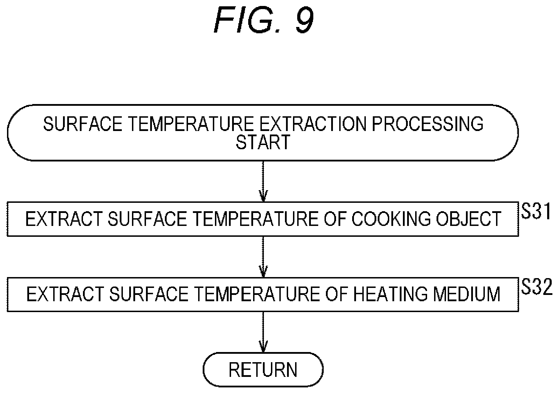

In step S3, the surface temperature extraction unit 103 performs surface temperature extraction processing. In the surface temperature extraction processing, surface temperatures of the cooking object 12 and the heating medium are extracted. Details of the surface temperature extraction processing will be described later with reference to a flowchart of Fig. **9****.**

In step S4, the process situation recognition unit 104 recognizes a situation of a cooking process on the basis of the information obtained before the processing in step S4. Details of recognition of the situation of the cooking process will be described later.

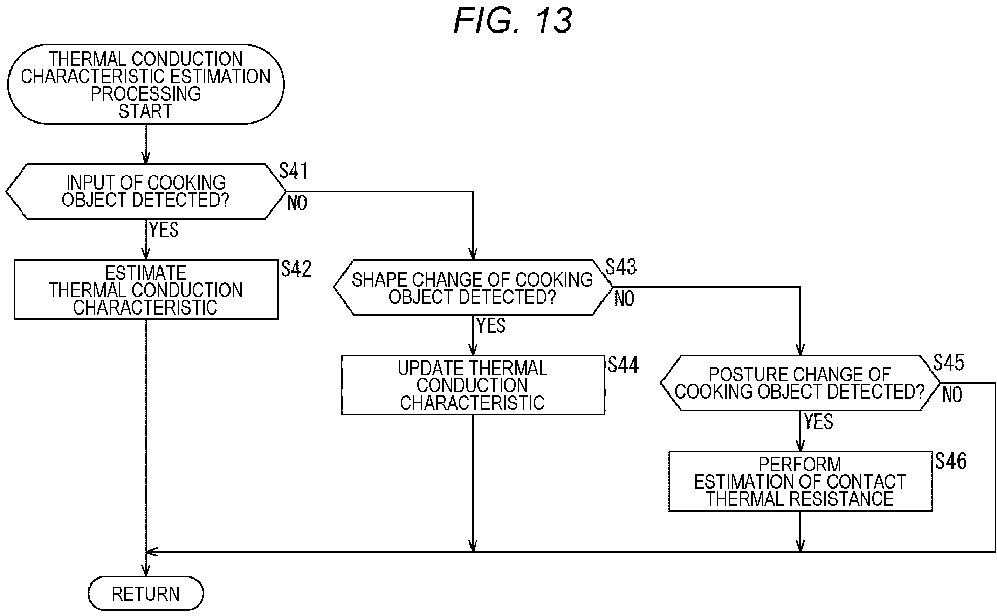

In step S5, the thermal conduction characteristic estimation unit 105 performs thermal conduction characteristic estimation processing. In the thermal conduction characteristic estimation processing, a thermal conduction characteristic of the cooking object 12 is estimated. Details of the thermal conduction characteristic estimation processing will be described later with reference to a flowchart of Fig. 13.

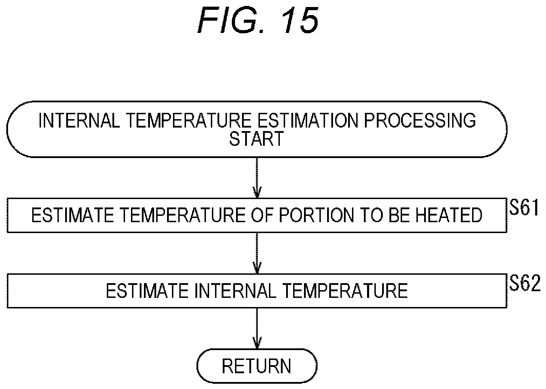

In step S6, the internal temperature estimation unit 106 performs internal temperature estimation processing. In the internal temperature estimation processing, a temperature of the portion to be heated of the cooking object 12 is estimated, and an internal temperature is estimated on the basis of an estimation result of the temperature of the portion to be heated. Details of the internal temperature estimation processing will be described later with reference to a flowchart of Fig. 15.

In step S7, the effector control unit 107 controls the effector unit 23 on the basis of an estimation result of the internal temperature of the cooking object 12 by the internal temperature estimation unit 106. An example of control of the effector unit 23 will be described later.

After the control of the effector unit 23 is performed in step S7, the process ends. Every time the sensor data is input, the above series of processing is executed.

### <Position and Shape Recognition Processing>

Here, the position and shape recognition processing performed in step S2 of Fig. 4 will be described with reference to the flowchart of Fig. 5.

### (2-1) Detection of Shielding of Field of View by Operation of Cook

In step S21, the position and shape recognition unit 102 detects shielding of a field of view of the camera sensor due to the cooking work of the cook.

When the cook is operating the cooking object 12, human fingers, tongs, and the like may enter the field of view of the camera sensor and shield the object whose position and shape are to be recognized. The object includes the cooking object 12 such as steak meat and the cooking utensil 11 such as a frying pan. If subsequent processing is performed in such a state, there is a case where accuracy of the processing is reduced.

The position and shape recognition unit 102 detects that a hand of the cook is inserted into the field of view (within an imaging range) of the camera sensor by image recognition for an RGB image and a depth image, and recognizes a position of the hand. In a case where an important object is shielded by the cooking work of the cook, subsequent processing related to recognition of the object is skipped. By skipping the processing in and after step S22, it is possible to prevent a decrease in the accuracy of the processing.

### (2-2) Detection and Contour Extraction of Cooking Utensil 11 and Cooking Object 12

In step S22, the position and shape recognition unit 102 detects, by image processing, whether the cooking utensil 11 and the cooking object 12 are present in the field of view. In a case where the cooking utensil 11 and the cooking object 12 are present in the field of view, the position and shape recognition unit 102 extracts contours of the cooking utensil 11 and the cooking object 12 on an image of the basic sensor group. Extracting the contour means identifying the contour of the object.

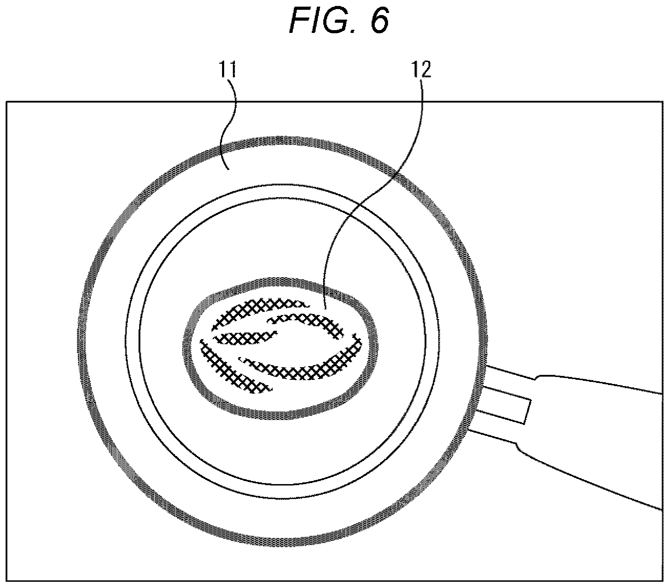

Fig. 6 is a diagram illustrating an example of the contour extraction.

Fig. 6 illustrates an RGB image obtained by imaging a state in which steak meat serving as the cooking object 12 is cooked using a frying pan serving as the cooking utensil 11. As illustrated by being surrounded by thick lines in Fig. 6, the position and shape recognition unit 102 extracts a contour of a portion of a container (main body) of the cooking utensil 11 and a contour of the cooking object 12 from the RGB image.

Various methods are conceivable as a method of contour extraction using an image processing technology based on sensor data acquired by the basic sensor group. Even in a case where any method is used, if a contour can be specified on an image acquired by a certain sensor, the contour can be specified on an image acquired by another sensor by coordinate conversion between the sensors.

The contour extraction of the cooking utensil 11 is performed by, for example, the following methods.

### (A) Example of Using Database by Machine Learning

Object detection of the cooking utensil 11 and contour extraction of the cooking utensil 11 are performed using a database (inference model) generated by machine learning. When an RGB image is used as input information, information indicating a contour of the cooking utensil 11 is obtained as output information from the database.

### (B) Example of Using Known Information

In a case where known information such as a three-dimensional model representing a three-dimensional shape of the cooking utensil 11 is prepared in the position and shape recognition unit 102, a contour of the cooking utensil 11 is extracted using the known information. For example, presence/absence and a position and posture of the cooking utensil 11 are detected by registration processing of the three-dimensional model with respect to a scene point cloud generated on the basis of a depth image. The contour of the cooking utensil 11 on an RGB image is extracted on the basis of the detected position and posture and the three-dimensional model.

### (C) Example of Using Marker Embedded in Cooking Utensil 11

In a case where a three-dimensional shape of the cooking utensil 11 and a marker such as a characteristic pattern embedded in a specific region of the cooking utensil 11 are prepared as known information in the position and shape recognition unit 102, presence/absence and a position and posture of the marker on an RGB image are detected using the known information. On the basis of the position and posture of the marker, a position and posture of the cooking utensil 11 are identified, and a contour thereof on the RGB image is extracted.

After detecting the presence/absence of the cooking utensil 11 and extracting the contour thereof by the above-described method, the position and shape recognition unit 102 detects presence/absence of the cooking object 12 and extracts a contour thereof by setting the inside of the contour of the cooking utensil 11 as a region of interest.

As the cooking object 12 that can be handled by methods proposed by the present technology, a solid object capable of specifying an overall shape and a shape of the portion to be heated is assumed. For example, solid objects such as lump meat, fish (whole or fillet), pancake, and omelet are treated as the cooking object 12. The plurality of cooking objects 12 may be put on the cooking utensil 11, or the cooking objects 12 of different types may be put thereon together.

Detection of the presence/absence of the cooking object 12 and extraction of the contour thereof are performed by, for example, the following methods.

### (D) Example of Using Database by Machine Learning

Object detection of the cooking object 12 and contour extraction of the cooking object 12 are performed using a database generated by machine learning. When an RGB image is used as input information, information indicating a contour of the cooking object 12 is obtained as output information from the database.

### (E) Example of Using Background Difference Processing

In a case where the three-dimensional shape of the cooking utensil 11 is known and the position and posture of the cooking utensil 11 are detected by the method (B) or (C) described above, a depth image showing only the cooking utensil 11 is generated. By performing background difference processing on a depth image actually captured by the stereo camera 2 with the depth image showing only the cooking utensil 11 as a background, a depth image of the cooking object 12 is extracted as a foreground. Therefore, a contour of the cooking object 12 on the depth image is extracted.

### (2-3) Shape Recognition and Three-Dimensional Model Construction of Cooking Object 12

Returning to the description of Fig. 5, in step S23, the position and shape recognition unit 102 constructs a three-dimensional model of the cooking object 12. The position and shape recognition unit 102 functions as a construction unit that constructs a three-dimensional model of the cooking object 12 on the basis of the sensor data.

In a case where the cooking object 12 is put in the cooking utensil 11, the position and shape recognition unit 102 constructs a three-dimensional model on the basis of shape information representing a shape of the cooking object 12.

Furthermore, in a case where any of the shape, volume, and a position and posture of the cooking object 12 is changed in a cooking process, the position and shape recognition unit 102 reconstructs the three-dimensional model.

Since the contour of the cooking object 12 on the depth image is extracted by the processing of step S22, it is possible to create point cloud data of the cooking object 12. The point cloud data represents a three-dimensional shape of the cooking object 12 with respect to an exposed surface where the distance sensor 32 can detect a distance. Note that a three-dimensional shape and a position and posture of the cooking utensil 11 (in particular, a heating surface in contact with the cooking object 12) serving as a heating medium are recognized. The three-dimensional shape and the position and posture of the cooking utensil 11 serve as a reference of the three-dimensional model of the cooking object 12.

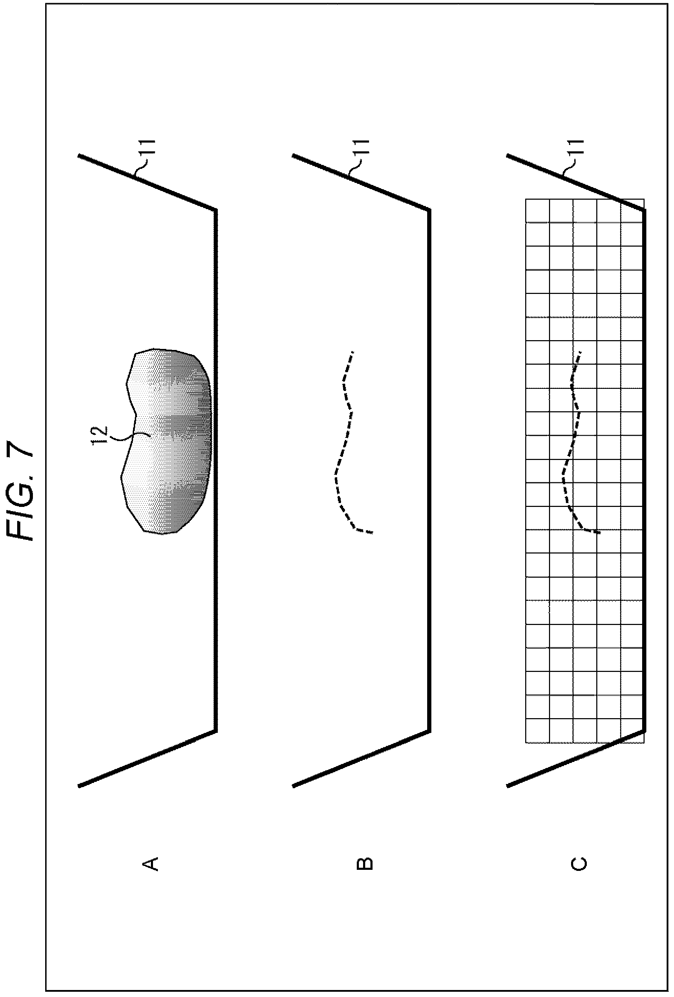

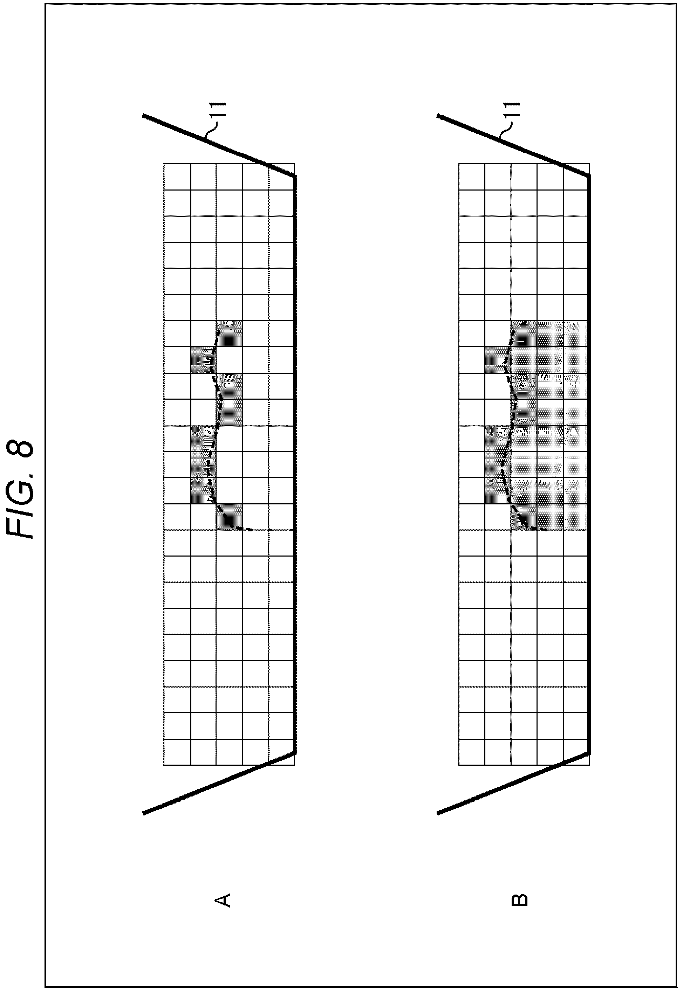

Figs. 7 and 8 are cross-sectional views illustrating an example of a method for constructing a three-dimensional model of the cooking object 12. Although a two-dimensional cross section is illustrated in Figs. 7 and 8, processing is actually performed so as to construct the three-dimensional model.

As illustrated in A of Fig. 7, it is assumed that steak meat as the cooking object 12 is placed on the cooking utensil 11. The position and shape recognition unit 102 generates point cloud data of the cooking object 12 on the basis of a depth image.

As indicated by a broken line in B of Fig. 7, the point cloud data based on the depth image is generated so as to represent an exposed surface of the cooking object 12 included in an angle of view of the distance sensor 32 installed above the cooking utensil 11.

As illustrated in C of Fig. 7, the position and shape recognition unit 102 performs mesh division of a space on the cooking utensil 11 including the cooking object 12 with reference to the heating surface of the cooking utensil 11. In C of Fig. 7, the space on the cooking utensil 11 is divided by voxels. Setting parameters representing a shape and fineness of the mesh are appropriately set according to a type, a size, a shape, and the like of the cooking object 12.

As indicated by densely painted voxels in A of Fig. 8, the position and shape recognition unit 102 determines voxels including the point cloud data of the cooking object 12 as components of the three-dimensional model.

As indicated by thinly painted voxels in B of Fig. 8, the position and shape recognition unit 102 also determines all voxels below the voxels determined as the components of the three-dimensional model on the basis of the point cloud data (in a direction away from the distance sensor 32 perpendicularly to the heating surface of the cooking utensil 11) as components of the three-dimensional model.

The position and shape recognition unit 102 sets a set of voxels determined as the components as a shape structure of the three-dimensional model of the cooking object 12, thereby constructing the three-dimensional model of the cooking object 12.

The construction procedure of the three-dimensional model as described above is an example. On the basis of the shape information of the cooking object 12 measured by the distance sensor 32, the three-dimensional model of the cooking object 12 is constructed so as to have an expression form suitable for thermal conduction analysis. Accuracy of the contour extraction performed in step S22 and the construction of the three-dimensional model performed in step S23 is determined on the basis of estimation accuracy of an internal temperature required as a result of the thermal conduction analysis.

After the three-dimensional model of the cooking object 12 is constructed in step S23, the processing returns to step S2 in Fig. 4, and subsequent processing is performed.

### <Surface Temperature Extraction Processing>

The surface temperature extraction processing performed in step S3 of Fig. 4 will be described with reference to a flowchart of Fig. 9.

### (3-1) Extraction of Surface Temperature of Cooking Object 12

In step S31, the surface temperature extraction unit 103 extracts a surface temperature of the cooking object 12 on the basis of the thermal image acquired by the temperature sensor 31, and maps the surface temperature on the three-dimensional model of the cooking object 12 constructed by the position and shape recognition unit 102. Extracting the temperature means detecting the temperature.

On a surface of the cooking object 12, a position where temperature can be extracted on the basis of the thermal image is referred to as a "temperature extraction point". The temperature extraction point is represented in three-dimensional coordinates.

Furthermore, a position where temperature is defined on the three-dimensional model is referred to as a "temperature definition point". The temperature definition point is set according to a method of constructing the three-dimensional model. For example, the temperature definition point is set at a vertex or a center point of each voxel.

The surface temperature extraction unit 103 determines temperature at the temperature definition point on the basis of a temperature value at the temperature extraction point in the vicinity of the temperature definition point. For example, the surface temperature extraction unit 103 sets a region within a certain distance from the temperature definition point as a neighboring region, and determines a temperature at the temperature extraction point closest to the temperature definition point as the temperature at the temperature definition point.

The temperature at the temperature definition point may be determined using general sampling processing such as applying filter processing to the thermal image in a case where there is a lot of noise at the temperature extraction point, or linearly complementing the temperature at the temperature definition point in a case where a temperature gradient is large in the vicinity of the temperature definition point.

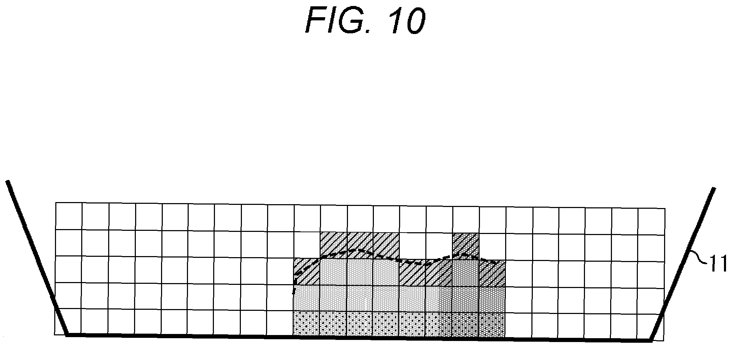

For example, a temperature definition point of a voxel indicated by hatching in Fig. 10 is determined. The hatched voxels match the voxels including the point cloud data of the cooking object 12. Note that the voxels in which the temperature definition point is determined may not match the voxel including the point cloud data of the cooking object 12.

### (3-2) Extraction of Surface Temperature of Heating Medium

In step S32, the surface temperature extraction unit 103 extracts a surface temperature of the heating medium on the basis of the thermal image acquired by the temperature sensor 31.

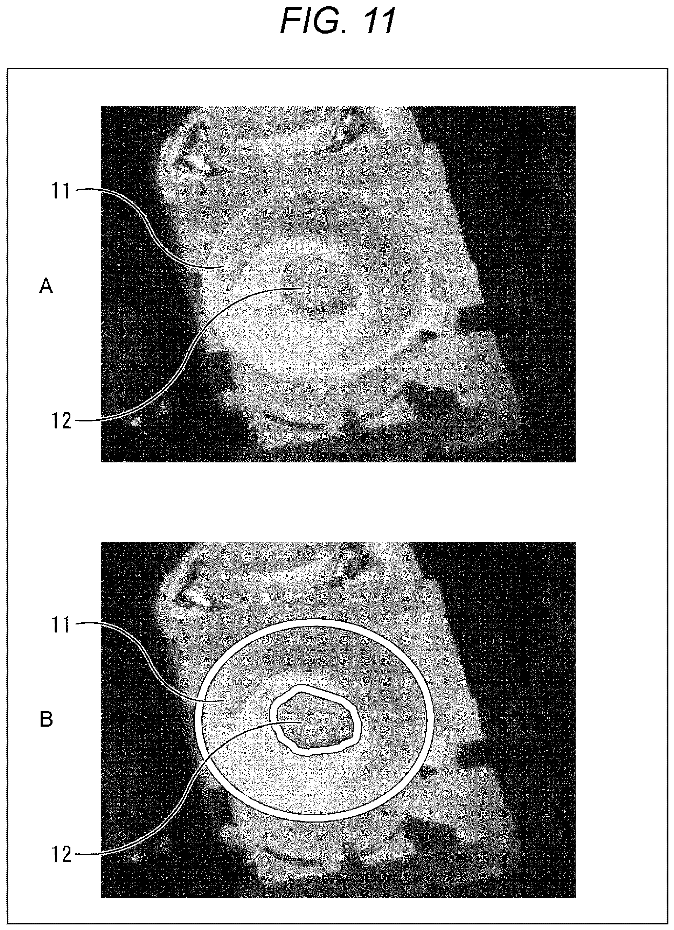

By the position and shape recognition processing in step S2 of Fig. 4, the contours of the cooking utensil 11 and the cooking object 12 on the thermal image are extracted. For example, image processing is performed on a thermal image obtained by imaging a state in which steak meat is cooked using a frying pan as illustrated in A of Fig. 11, whereby contours of the cooking utensil 11 and the cooking object 12 are extracted as surrounded by white thick lines in B of Fig. 11.

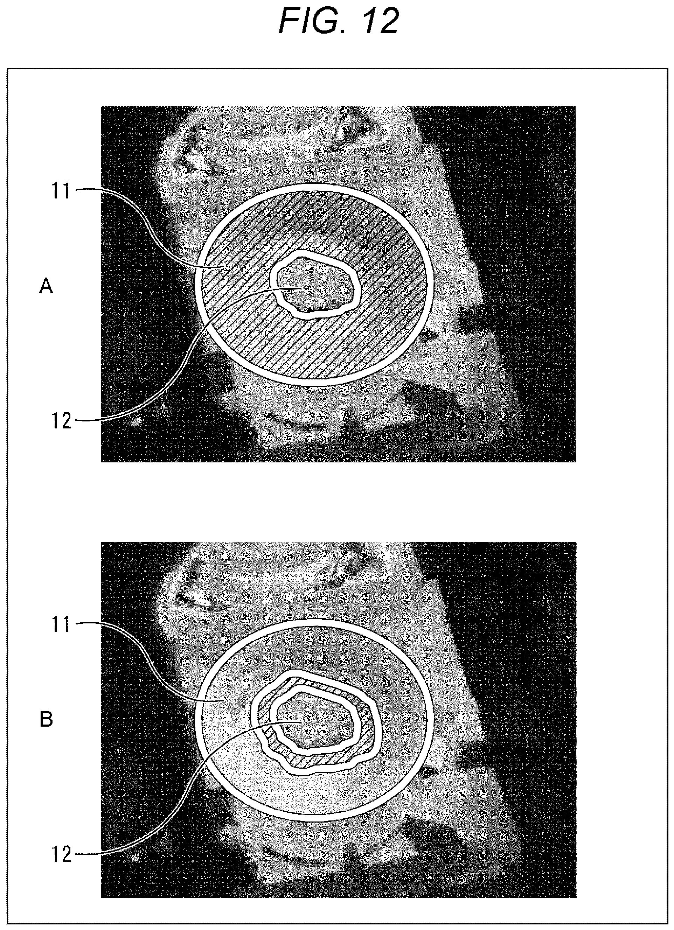

The surface temperature extraction unit 103 extracts the surface temperature of the heating medium on the basis of a temperature in a region as indicated by hatching in A of Fig. 12, excluding the inside of the contour of the cooking object 12 from the inside of the contour of the cooking utensil 11. The heating medium whose temperature is actually measured is, for example, oil or water put in the cooking utensil 11.

As shown in the thermal image in A of Fig. 11, unevenness occurs in a temperature distribution of the heating medium depending on how the oil is accumulated on the frying pan. In order to obtain the temperature of the heating medium that directly contributes to thermal conduction to the cooking object 12, it is preferable to focus on a region in the vicinity of the cooking object 12.

Therefore, as shown in B of Fig. 12, the surface temperature extraction unit 103 obtains an enlarged contour of the cooking object 12, and focuses on a neighboring region that is a region obtained by removing the inside of the contour of the cooking object 12 from the inside of the enlarged contour. The enlarged contour is a contour obtained by enlarging the contour of the cooking object 12 outward, and is set to be included in the inside the contour of the cooking utensil 11. A hatched region in B of Fig. 12 is the neighboring region.

The surface temperature extraction unit 103 extracts an average temperature of the neighboring region in the entire region of the heating medium as a surface temperature Tₕₑₐₜ of the heating medium.

After the surface temperature Tₕₑₐₜ of the heating medium is calculated in step S32, the process returns to step S3 in Fig. **4****,** and subsequent processes are performed.

### <Situation Recognition of Cooking Process>

Details of recognition of the situation of the cooking process performed in step S4 of Fig. 4 will be described. For example, the process situation recognition unit 104 recognizes that the following situation has occurred.
(A) Input of Cooking Object 12 to Cooking Utensil 11
(B) Removal of Cooking Object 12 from Cooking Utensil 11
(C) Position and Posture Change of Cooking Object 12 in Cooking Utensil 11
(D) Shape Change of Cooking Object 12 in Cooking Utensil 11

Various recognition methods are conceivable as a situation recognition method using an image recognition technology based on sensor data acquired by the basic sensor group. An example will be described below.

According to the processing in steps S2 and S3, the number of cooking objects 12 put in the cooking utensil 11, and their positions, contours, shapes, and surface temperatures are recognized. Furthermore, a timing at which cooking work is performed by a cook is also recognized as auxiliary information. The auxiliary information is information for assisting the recognition of the situation of the cooking process.

Occurrence of the input or removal of the cooking object 12 ((A) or (B) described above) is recognized in a case where the number of cooking objects 12 is changed before and after the cooking work by the cook is performed.

In a case where a weight sensor is provided as a sensor constituting the sensor unit 21, occurrence of the input or removal of the cooking object 12 may be recognized in response to detection of a discontinuous weight change by the weight sensor. In a case where there is a plurality of cooking objects 12, it is necessary to identify sameness of an individual as the cooking object 12 and to appropriately maintain association with the three-dimensional model.

Occurrence of the position and posture change of the cooking object 12 ((C) described above) is recognized on the basis of a change in position, contour, shape, surface temperature, surface image, and the like of the cooking object 12 regardless of presence or absence of the number change. In particular, it is recognized that a portion (portion to be heated) of the cooking object 12 in contact with the heating medium has greatly changed, such as turning over of meat or fish being cooked.

In an example in which steak meat is turned over, there is a case where no significant change in position, contour, shape, and the like of the steak meat. Thus, while referring to these pieces of information, it is preferable to determine the change in position and posture of the steak meat on the basis of the change in surface temperature of the cooking object 12 as described later.

The shape of the cooking object 12 may change in the cooking process. For example, pancake or hamburger steak serving as the cooking object 12 expands by heating. In a case where the posture or shape of the cooking object 12 changes in the cooking process and a deviation from the three-dimensional model increases, it is necessary to reconstruct the three-dimensional model. Reconstruction of the three-dimensional model will be described later.

### <Thermal Conduction Characteristic Estimation Processing>

The thermal conduction characteristic estimation processing performed in step S5 of Fig. 4 will be described with reference to a flowchart of Fig. 13.

### · Generation of Thermal Conduction Characteristic

In step S41, the thermal conduction characteristic estimation unit 105 determines whether or not an input of the cooking object 12 has been detected on the basis of the recognition result of the process situation by the process situation recognition unit 104.

In a case where it is determined in step S41 that the input of the cooking object 12 has been detected, in step S42, the thermal conduction characteristic estimation unit 105 estimates a thermal conduction characteristic of the cooking object 12 input to the cooking utensil 11. The thermal conduction characteristic is a parameter required for thermal conduction analysis and includes, for example, thermal conductivity, specific heat, density, and a thermal diffusion coefficient of an object. The thermal diffusion coefficient is calculated on the basis of the thermal conductivity, specific heat, and density of the object.

Specifically, the thermal conduction characteristic estimation unit 105 specifies a food material characteristic indicating a type, a portion, quality, and the like of the food material as the cooking object 12, and obtains a thermal conduction characteristic corresponding to the food material characteristic by using various known measurement data. The food material characteristic is specified, for example, by methods described below.

### (A) Example of Selecting Recipe Data by Cook

A cook selects recipe data using a UI function of the effector unit 23. For example, when cooking work is performed according to navigation by an application installed in the information terminal 7, the cook selects recipe data of a dish to be made.

The thermal conduction characteristic estimation unit 105 specifies a food material characteristic by directly acquiring food material characteristic information included in the recipe data selected by the cook or by acquiring food material characteristic information from a database.

### (B) Example of Inputting Food Material Characteristic by Cook

As auxiliary means of the method (A) described above, a cook directly inputs a food material characteristic using the UI function. For example, in a case where there is a difference between the food material characteristic of the food material presented by the recipe data and a food material characteristic of a food material actually used for cooking, the cook inputs information of the food material characteristic that is not held by the recipe data. A type of food material may be set using a button of a main body of the cooking utensil 11 such as a microwave oven.

### (C) Example of Specifying Food Material Characteristic by Image Recognition

The thermal conduction characteristic estimation unit 105 specifies a food material characteristic of the cooking object 12 by image recognition based on information acquired by the sensor unit 21, such as an RGB image in which the cooking object 12 appears. With respect to a food material characteristic such as a fat content of meat in which an individual difference of a food material appears, image recognition of an image in which the actual cooking object 12 appears is effective.

### (D) Example of Specifying Density

The thermal conduction characteristic estimation unit 105 can specify volume of the input cooking object 12 on the basis of the three-dimensional model of the cooking object 12. In a case where the sensor unit 21 includes a weight sensor and can individually measure weight of the cooking object 12, the thermal conduction characteristic estimation unit 105 specifies density on the basis of the volume and weight of the cooking object 12. In a case where the food material characteristic is specified by the method (C) described above, it is possible to narrow more probable candidates for the food material characteristic by setting the density as known information.

The thermal conduction characteristic of the cooking object 12 is estimated on the basis of the food material characteristic specified as described above.

### · Update of Thermal Conduction Characteristic

On the other hand, in a case where it is determined in step S41 that the input of the cooking object 12 has not been detected, the process proceeds to step S43.

In step S43, the thermal conduction characteristic estimation unit 105 determines whether or not a shape change of the cooking object 12 has been detected on the basis of the recognition result of the process situation by the process situation recognition unit 104.

In a case where it is determined in step S43 that the shape change of the cooking object 12 has been detected, in step S44, the thermal conduction characteristic estimation unit 105 updates the thermal conduction characteristic of the cooking object **12.**

The thermal conduction characteristic of the cooking object 12 generally changes in a heating process. Therefore, it is desirable that the thermal conduction characteristic is updated as needed not only at the time of input but also after the input. The thermal conduction characteristic estimation unit 105 repeatedly updates the thermal conduction characteristic in the cooking process such as the heating process.

There is also a food material whose density greatly changes in the heating process, such as a pancake. Such a change in density affects a thermal conduction characteristic. In a case where volume of the cooking object 12 greatly changes in the heating process, the thermal conduction characteristic estimation unit 105 updates an estimated value of density on the basis of a state of the cooking object **12.**

Moisture of meat or fish is lost by heating. Since specific heat of moisture is high, a moisture content of the cooking object 12 has a great influence on the thermal conduction characteristic. Therefore, it is also useful to detect a change in moisture content.

For example, as described in Patent Document 4, in a case where it is assumed that a weight change of the cooking object 12 is due to moisture evaporation, the thermal conduction characteristic estimation unit 105 can estimate a moisture content on the basis of the weight change of the cooking object 12.

Furthermore, as another method, the moisture content may be detected using a database constructed by machine learning so as to input the RGB image acquired by the image sensor 33 and output the food material characteristic and the moisture content of the cooking object 12. In this case, it is possible to expect estimation accuracy equivalent to that of a skilled chef who visually judges a state of the cooking object 12.

Not limited to the RGB image, the database may be constructed by machine learning using a thermal image obtained by imaging the cooking object 12 (surface temperature of the cooking object 12), an internal temperature estimated in subsequent processing, and the like.

In a case where the sensor unit 21 is provided with a near-infrared spectrometer, a change in moisture content may be obtained on the basis of an infrared radiation spectrum of the cooking object 12 measured by the near-infrared spectrometer. In this manner, the moisture content may be directly measured.

### · Estimation of Contact Thermal Resistance

On the other hand, in a case where it is determined in step S43 that the shape change of the cooking object 12 has not been detected, the processing proceeds to step S45.

In step S45, the thermal conduction characteristic estimation unit 105 determines whether or not a posture change of the cooking object 12 has been detected on the basis of the recognition result of the process situation by the process situation recognition unit 104.

In a case where it is determined in step S45 that the posture change of the cooking object 12 has been detected, in step S46, the thermal conduction characteristic estimation unit 105 estimates contact thermal resistance between the cooking object 12 and the heating medium.

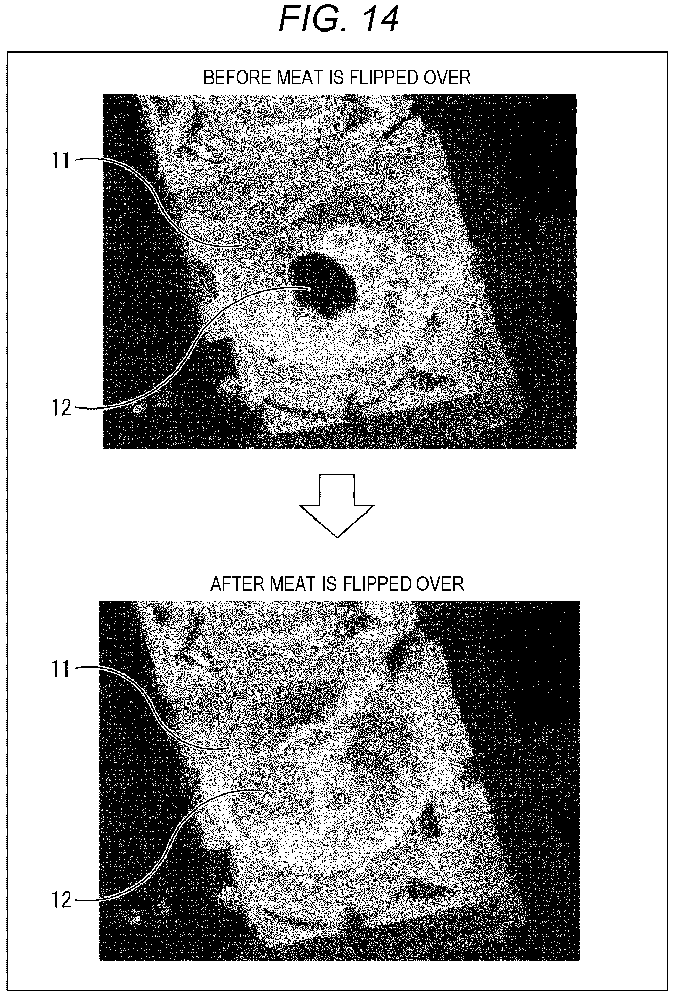

Fig. 14 is a diagram illustrating an example of thermal images before and after steak meat cooked in a frying pan is flipped over.

As illustrated in an upper stage of Fig. 14, before the steak meat serving as the cooking object 12 is flipped over, a surface of the cooking object 12 is not yet heated and maintains a temperature close to normal temperature. In the upper stage of Fig. 14, the surface of the cooking object 12 is indicated by a blackish color, which means that the surface temperature is lower than a temperature of the surrounding heating medium or the like.

On the other hand, as shown in a lower stage of Fig. 14, after the cooking object 12 is turned over, the surface of the cooking object 12 is heated to a high temperature. In the lower stage of Fig. 14, the surface of the cooking object 12 is shown in a whitish color, which means that the surface temperature is high, similar to the temperature of the surrounding heating medium or the like.

The temperature of the cooking object 12 and the temperature of the heating medium in the vicinity of the cooking object 12 are extracted by the processing in steps S2 and S3 in Fig. 4. On the basis of the temperatures of the cooking object 12 and the heating medium, it is determined that the posture of the cooking object 12 has changed and the portion to be heated, which is a back surface of the cooking object 12, has been exposed to a surface, that is, the cooking object 12 has been turned over.

For example, in a case where conditions defined by the following formulas (1) and (2) are satisfied, it is determined that the cooking object 12 has been turned over. Note that the process situation recognition unit 104 determines that the cooking object 12 has been turned over based on the following formulas (1) and (2).

[Math. 1] ${T}_{after} - {T}_{before} > {T}_{flip}$ (1) [Math. 2] ${T}_{heat} - {T}_{after} < {T}_{gap}$ (2)

T_{before} represents a surface temperature of the cooking object 12 before a posture change, and T_{after} represents a surface temperature of the cooking object 12 after the posture change. Tₕₑₐₜ represents a temperature of the heating medium in the vicinity of the cooking object 12 after the posture change.

Furthermore, T_{flip} represents a threshold of a temperature difference at which it is determined that the cooking object has been flipped over, and T_{gap} represents a threshold of a temperature difference of a contact surface at which it is determined that the cooking object 12 has been in contact with the heating medium for a sufficient time.

Satisfying the condition defined by the formula (1) means that a change in surface temperature of the cooking object 12 is larger than the threshold before and after the posture change, that is, the surface of the cooking object 12 exposed by turning over is sufficiently heated.

Furthermore, satisfying the condition defined by the formula (2) means that a difference between the temperature of the heating medium and the surface temperature of the cooking object 12 after the posture change is smaller than the threshold, that is, the surface of the cooking object 12 exposed by turning over is sufficiently heated to a temperature close to the temperature of the heating medium.

When the conditions defined by the formulas (1) and (2) are satisfied and it is determined as being immediately after the portion to be heated of the cooking object 12, which has been sufficiently heated, is exposed to the surface, the surface temperature T_{after} can be regarded as a temperature equal to the temperature of the portion to be heated in contact with the heating medium having the temperature Tₕₑₐₜ.

As illustrated in the thermal image in the lower stage of Fig. 14, there is a difference between the surface temperature T_{after} reflecting the temperature of the portion to be heated and the temperature Tₕₑₐₜ of the heating medium, and in general, the temperature Tₕₑₐₜ of the heating medium is higher than the surface temperature T_{after}. This is due to contact thermal resistance generated on the contact surface between the heating medium and the cooking object 12.

Contact thermal resistance R_{contact} on the contact surface between the heating medium and the cooking object 12 is defined by the following formula (3).

[Math. 3] ${R}_{contact} = \frac{{T}_{heat} - {T}_{after}}{Q}$ (3)

Q represents a heat flow rate transferred from the heating medium to the cooking object 12. In a case of steady thermal conduction, the heat flow rate Q is expressed by the following formula (4).

[Math. 4] $Q = - Ak \frac{\partial T}{\partial z}$ (4)

A represents an area of the contact surface on which thermal conduction occurs, and k represents thermal conductivity of the cooking object 12. z represents a direction in which heat is transferred. Here, z represents a vertically upward direction from the contact surface. T is a temperature of the cooking object 12 and is represented by a function of z.

The area A is obtained on the basis of the contour of the cooking object 12 extracted by the position and shape recognition processing in step S2 of Fig. 4. The thermal conductivity k is obtained as a part of the thermal conduction characteristic estimated by the thermal conduction characteristic estimation processing in step S5.

Therefore, when ∂T/∂z is determined, the heat flow rate Q is estimated by the formula (4). In a situation where the temperature of the heating medium is stabilized and the heating medium is heated for a sufficient time, it can be expected that a temperature gradient inside the cooking object 12 is a relatively monotonous gradient from the contact surface toward a center portion (along the z direction).

In a case where a linear temperature gradient occurs, ∂T/∂z can be approximated to a value expressed by the following formula (5).

[Math. 5] $\frac{\partial T}{\partial z} \approx \frac{{T}_{after} - {T}_{center}}{L / 2}$ (5)

L represents thickness of the cooking object 12 in the z direction, and is obtained on the basis of the three-dimensional model constructed by the processing of step S2. T_{center} represents a temperature of the center portion of the cooking object 12, which is located above the contact surface by a distance L/2.

Although a value of the temperature T_{center} of the center portion is accurately unknown, in a case where the formula (1) holds, the values of T_{center} and T_{before} can be approximated as the same value. Assuming a state in which the exposed surface before the posture change is not directly heated yet and the temperature of the exposed surface is close to normal temperature (temperature before the start of heating), it is considered that the temperature of the center portion remains at a similar temperature.

Therefore, the contact thermal resistance R_{contact} is approximately obtained by the following formula (6).

[Math. 6] ${R}_{contact} = - \frac{L}{2 Ak} ⋅ \frac{{T}_{heat} - {T}_{after}}{{T}_{after} - {T}_{before}}$ (6)

The contact thermal resistance R_{contact} thus obtained is used for estimation of internal temperature. After the contact thermal resistance is estimated in step S46, the processing returns to step S5 in Fig. 4, and subsequent processing is performed.

Similarly, after the thermal conduction characteristic is obtained in step S42, after the thermal conduction characteristic is updated in step S44, or in a case where it is determined in step S45 that the posture change of the cooking object 12 has not been detected, the processing returns to step S5 in Fig. 4, and subsequent processing is performed.

### <Internal Temperature Estimation Processing>

The internal temperature estimation processing performed in step S6 of Fig. 4 will be described with reference to a flowchart of Fig. 15.

### (6-1) Estimation of Temperature of Portion to be Heated

In step S61, the internal temperature estimation unit 106 estimates a temperature of the portion to be heated in contact with the heating medium, and maps the temperature on the three-dimensional model of the cooking object 12. For example, the temperature of the portion to be heated is mapped to a temperature definition point of a voxel indicated with dots in Fig. 10.

In the formula (6), the surface temperature T_{after} is replaced with a temperature T_{bottom} of the portion to be heated (bottom surface), and the surface temperature T_{before} is replaced with a temperature Tₜₒₚ of the exposed surface (surface), whereby the following formula (7) representing the temperature T_{bottom} of the portion to be heated is obtained.

[Math. 7] ${T}_{bottom} = \frac{r ⋅ {T}_{top} - {T}_{heat}}{r - 1}$ (7) [Math. 8] $r = \frac{A ⋅ k ⋅ {R}_{contact}}{L / 2}$ (8)

As shown in the formula (8), r is a dimensionless constant. The contact thermal resistance R_{contact} is caused by roughness, hardness, pressing pressure, and the like of the contact surface. It is considered that the contact thermal resistance R_{contact} is not rapidly changed in a state in which oil and the like serving as the heating medium is uniformly interposed on the contact surface and the portion to be heated of the cooking object 12 is heated to some extent.

Therefore, by treating the contact thermal resistance R_{contact} calculated once as a constant, the temperature T_{bottom} of the portion to be heated of the cooking object 12 can be estimated on the basis of the temperature Tₕₑₐₜ of the heating medium, the temperature Tₜₒₚ of the exposed surface of the cooking object 12, and the constant r obtained by the known parameter.

In a case where the contact thermal resistance R_{contact} is unknown, the internal temperature estimation unit 106 regards the contact thermal resistance R_{contact} = 0, and maps the temperature Tₕₑₐₜ of the heating medium as the temperature T_{bottom} of the portion to be heated of the cooking object 12.

### (6-2) Estimation of Internal Temperature

In step S62, the internal temperature estimation unit 106 estimates an internal temperature of the cooking object 12. By the processing up to the previous stage, the temperatures of the surface portion and the portion to be heated of the cooking object 12 are mapped on the three-dimensional model.

Here, the inside of the cooking object 12 is a portion corresponding to a region of the three-dimensional model to which temperature is not mapped. The internal temperature is estimated by a different method for each of the following conditions.

### (A) When Three-Dimensional Model of Cooking Object 12 is First Constructed

In an initial state in which the cooking object 12 is put into the cooking utensil 11 and heating is started, it is assumed that the internal temperature of the cooking object 12 is uniform. That is, the internal temperature is considered to be a temperature close to a surface temperature measured by the temperature sensor 31.

In this case, the internal temperature estimation unit 106 obtains an average value of the surface temperature of the cooking object 12, and maps the average value as the internal temperature in a voxel corresponding to the inside of the cooking object 12. This corresponds to an initial condition of thermal conduction analysis.

As described above, when the three-dimensional model of the cooking object 12 is first constructed, a representative value of the surface temperature of the cooking object 12 is estimated as the internal temperature. The representative value of the surface temperature of the cooking object 12 includes a value obtained on the basis of the surface temperature of the cooking object 12, such as an average value or a median value of the surface temperature of the cooking object 12.

### (B) When Change in Position and Posture or Shape of Cooking Object 12 is Detected

In a case where the change in position and posture or shape of the cooking object 12 is recognized in step S4, the three-dimensional model is reconstructed.

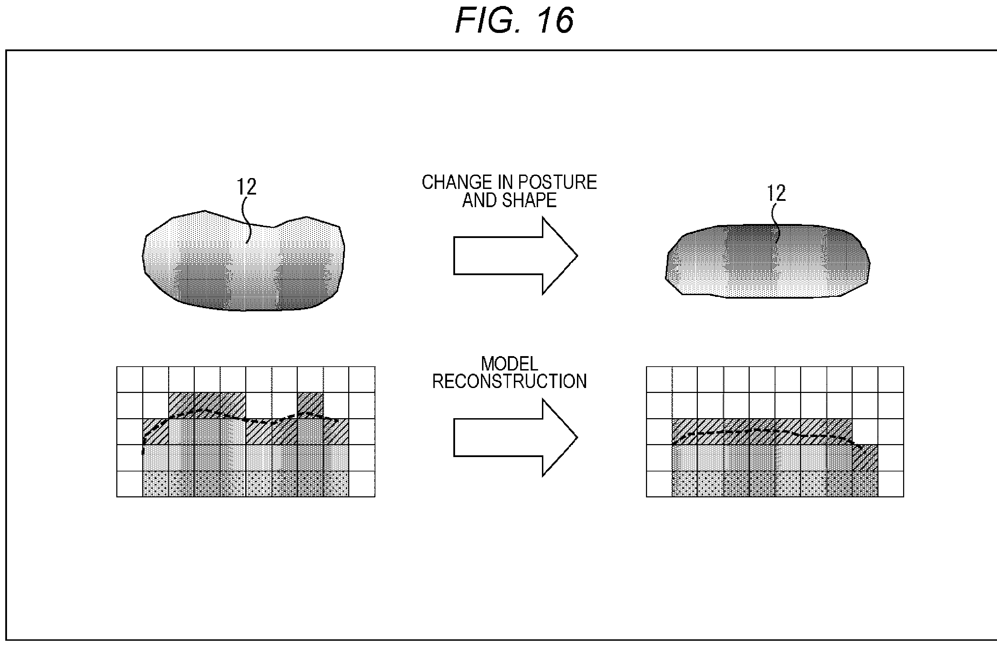

Fig. 16 is a cross-sectional view illustrating an example of reconstruction of the three-dimensional model.

As illustrated in an upper stage of Fig. 16, the posture and shape of the cooking object 12 are changed by, for example, turning over the cooking object 12. As illustrated on a left side of the upper stage of Fig. 16, before the posture and the shape change, a bottom surface temperature of the cooking object 12 is high and a surface temperature thereof is low. On the other hand, as shown on a right side, after the posture and the shape change, the surface temperature of the cooking object 12 is high and the bottom surface temperature thereof is low.

As illustrated in a lower stage of Fig. 16, the three-dimensional model is reconstructed according to the change in posture and shape of the cooking object 12.

In a case where the posture and shape of the cooking object 12 change, creation of voxels of the cooking object 12 and extraction of a temperature at a temperature definition point in a surface portion of the three-dimensional model indicated with dots are performed in a manner similar to the processing in steps S2 and S3.

The bottom surface temperature in a case where the posture and the shape of the cooking object 12 change is specified by the processing of step S61 and mapped to a voxel indicated with dots.

For other voxels excluding the surface portion and the portion to be heated among the voxels constituting the three-dimensional model, ideally, it is desirable to reproduce a temperature distribution estimated before the reconstruction in order to continue the thermal conduction analysis.

However, it is generally difficult to specify how the posture and shape of the cooking object 12 have changed before and after cooking work by a cook. Therefore, it is not easy to associate the temperature distribution of the three-dimensional model in voxel units and map the temperature distribution from the three-dimensional model before the reconstruction to the three-dimensional model after the reconstruction.

Therefore, the temperature at the temperature definition point of the three-dimensional model corresponding to the inside of the cooking object 12 is mapped by the following method.

First, on the basis of the temperature distribution before the reconstruction, the internal temperature estimation unit 106 obtains internal energy Uₐₗₗ of the cooking object 12 (total amount of heat held by the cooking object 12) on the basis of the following formula (9).

[Math. 9] ${U}_{all} = {\sum }_{i} c \left({T}_{i}-{T}_{0}\right)$ (9)

c represents specific heat, and Tᵢ represents temperature. T₀ represents reference temperature. A subscript i represents a temperature definition point. The sum of the internal energy at all the temperature definition points of the three-dimensional model before the reconstruction is obtained by the formula (9).

Note that the specific heat c is generally not uniform over an entire food material and has temperature dependency, but is treated as a constant here. In a case where an accurate value of the specific heat c including dependency on a portion of the food material and temperature is obtained in step S5, calculation may be performed using the accurate value of the specific heat c instead of being treated as the constant.

Next, as shown in the following formula (10), the internal temperature estimation unit 106 obtains internal energy U_{bound} of a portion where temperature can be specified in the reconstructed three-dimensional model.

[Math. 10] ${U}_{bound} = {\sum }_{j} c \left({T}_{j}-{T}_{0}\right)$ (10)

A subscript j represents a temperature definition point. The sum of internal energy at temperature definition points in a region corresponding to the surface portion and the portion to be heated from which the temperature is extracted in the reconstructed three-dimensional model is obtained by the formula (10).

The internal temperature estimation unit 106 determines a temperature T_{bulk} by the following formula (11), where N_{bulk} is the total number of temperature definition points whose temperatures are not specified in the reconstructed three-dimensional model.

[Math. 11] ${T}_{bulk} = \frac{1}{{cN}_{bulk}} \left({U}_{all}-{U}_{top}\right) + {T}_{0}$ (11)

The internal temperature estimation unit 106 maps the temperature T_{bulk} as a temperature value at a temperature definition point whose temperature is not specified in the reconstructed three-dimensional model.

As described above, when the change in position and posture or shape of the cooking object 12 has been recognized, the three-dimensional model is reconstructed so that the sum of the internal energy is stored before and after the reconstruction, and the temperature T_{bulk} is estimated as the internal temperature on the basis of the reconstructed three-dimensional model. Therefore, it is possible to substantially maintain estimation accuracy of the internal temperature before and after the reconstruction of the three-dimensional model.

### (C) In Other Cases

Using the three-dimensional model configured by the method (A) or (B) described above, the internal temperature estimation unit 106 performs thermal conduction analysis by numerical analysis such as a finite element method. A thermal conduction model, which is a mathematical model of thermal conduction, is expressed by a three-dimensional non-steady thermal conduction equation as in the following formula (12).

[Math. 12] $κ ΔT = \frac{\partial T}{\partial t}$ (12)

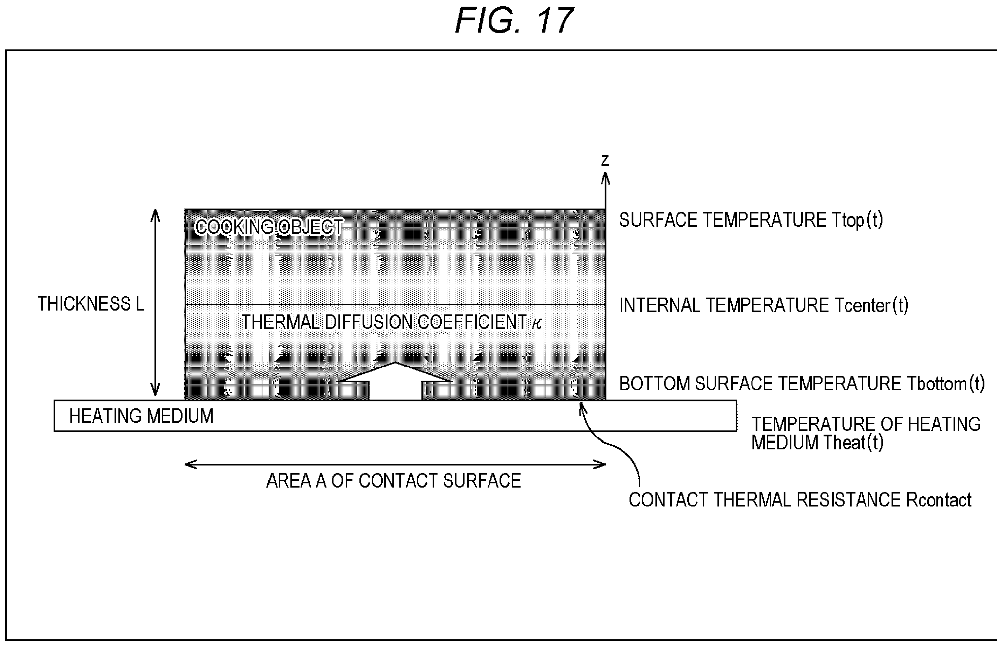

κ represents a thermal diffusion coefficient, and t represents time. T(x, y, z, t) represents a temperature of the cooking object 12 expressed as a function of time and space. Hereinafter, the arguments x, y, and z representing spatial coordinates are omitted. The thermal conduction model is illustrated in Fig. 17.

As an initial condition of the non-steady thermal conduction equation, a temperature distribution T(0) at time t = 0 is given. Time t = 0 is time when the cooking object 12 is put in the cooking utensil 11. In the method (A) described above, a temperature distribution mapped on the three-dimensional model corresponds to the temperature distribution T(0) under the initial condition. Note that the reconstruction of the three-dimensional model performed in the method (B) described above is performed at timing of time t > 0, and substantially means resetting of the initial condition.

As a boundary condition at time t > 0, a temperature distribution Tₜₒₚ(t) of the surface temperature measured by the temperature sensor 31 and a temperature distribution T_{bottom}(t) of the bottom surface temperature estimated in step S61 are given.

The temperature inside the cooking object 12, which is not bound as a boundary condition, is obtained by numerical calculation based on a governing equation obtained by discretizing the formula (12).

Incidentally, in order to appropriately control a finish of the cooking object 12, it is important to predict a change in the internal temperature of the cooking object 12 in a residual heat process after heating is stopped. In particular, in a case where volume of the cooking object 12 is large, a center temperature of the cooking object 12 greatly changes in the residual heat process.

The internal temperature estimation unit 106 predicts a temperature change of the cooking object 12 in the residual heat process by applying the thermal conduction model described above. For example, in a case where heating is stopped at time t = tₛₜₒₚ, the internal temperature estimation unit 106 predicts a time change of the temperature distribution Tₜₒₚ(t) of the surface temperature and the temperature distribution T_{bottom}(t) of the bottom surface temperature after time t = tₛₜₒₚ to use the predicted time change as a boundary condition, and executes similar numerical analysis prior to real time.

First, a method of predicting the temperature distribution Tₜₒₚ(t) is considered. As described above, since the temperature of the exposed surface of the cooking object 12 is always measured by the temperature sensor 31, the temperature distribution Tₜₒₚ(t) is predicted on the basis of time-series data of measurement values until heating is stopped.

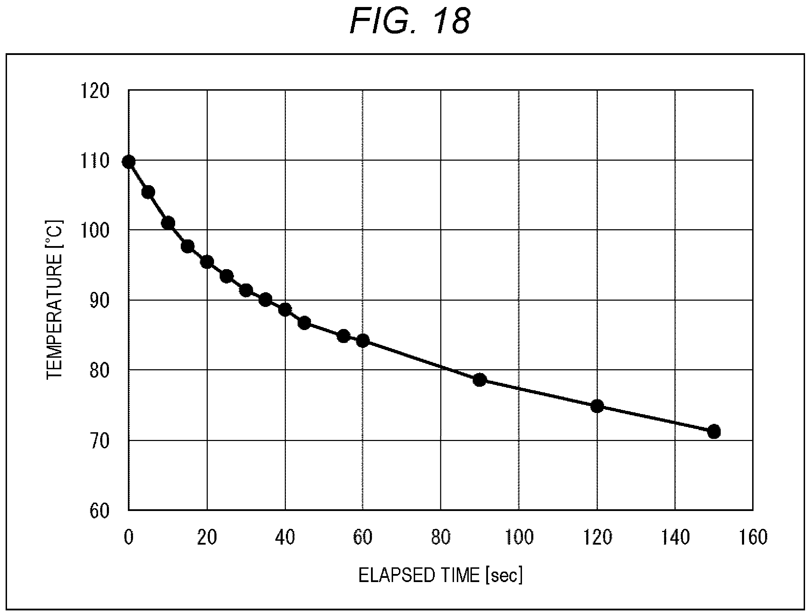

Fig. 18 is a graph showing an example of a measurement result of a temperature change of an exposed surface after steak meat cooked in a frying pan is flipped over. The vertical axis represents a temperature of the exposed surface, and the horizontal axis represents an elapsed time.

As shown in Fig. 18, the temperature of the exposed surface after being flipped over continues to decrease monotonically. As the temperature of the exposed surface decreases and approaches room temperature, the temperature change becomes gentle and linear. Therefore, by using a method of obtaining a slope of the temperature change at the time when heating is stopped and predicting the temperature change of the temperature distribution Tₜₒₚ(t) after the heating is stopped by simple extrapolation, the temperature distribution Tₜₒₚ(t) with sufficient accuracy can be obtained.

Next, a method of predicting the temperature distribution T_{bottom}(t) will be considered. The temperature distribution T_{bottom}(t) is predicted on the basis of a prediction result of a temperature change of the heating medium after the heating is stopped.

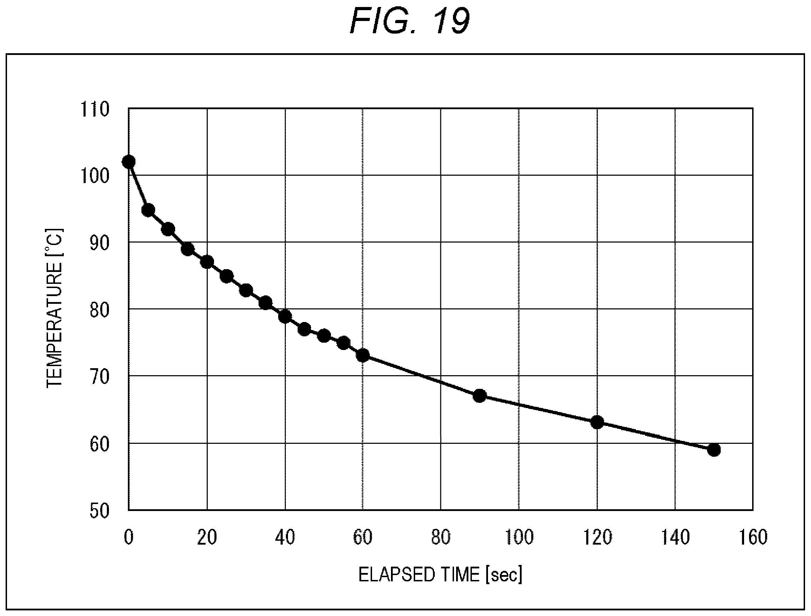

Fig. 19 is a graph showing an example of a measurement result of a temperature change of a frying pan after heating is stopped. The vertical axis represents a temperature of the frying pan, and the horizontal axis represents an elapsed time.

As shown in Fig. 19, the temperature of the frying pan after the heating is stopped continues to decrease monotonically. As the temperature of the frying pan decreases and approaches room temperature, the temperature change becomes gentle and linear. However, a rate of temperature decrease varies depending on a thermal conduction characteristic of a heating medium such as a frying pan. A heat capacity mainly affects the rate of temperature decrease.

Therefore, in order to accurately predict the temperature change of the heating medium, a thermal conduction characteristic of the cooking utensil 11 to be actually used is required. The thermal conduction characteristic of the cooking utensil 11 is calculated on the basis of physical property values related to thermal conduction, such as a material, specific heat, volume, and a surface area of the cooking utensil 11. A method of estimating the thermal conduction characteristic of the cooking utensil 11 to be actually used and predicting the temperature change of the heating medium on the basis of the thermal conduction characteristic is not a realistic method because there is no versatility.

In order to predict the temperature change of the heating medium, for example, it is an effective method to perform calibration for the cooking utensil 11 to be actually used as an initial setting.

For example, a cook places only the cooking utensil 11 to be actually used on a stove, heats the cooking utensil to a sufficiently high temperature, then stops fire, and naturally leaves the cooking utensil. By measuring the temperature of the cooking utensil 11 in a cooling process by the temperature sensor 31, a curve representing the temperature change as illustrated in Fig. 19 is obtained. Together with the temperature of the cooking utensil 11, room temperature is also measured.

The internal temperature estimation unit 106 holds, as a characteristic value of the cooking utensil 11, a slope of the temperature decrease of the cooking utensil 11 determined according to a difference between the temperature of the cooking utensil 11 and the room temperature. After the calibration, the internal temperature estimation unit 106 can predict a temperature change of the cooking utensil 11 on the basis of a measurement value of the temperature of the cooking utensil 11 and a measurement value of the room temperature at the time when heating is stopped in a cooking process.

On the basis of the temperature change of the cooking utensil 11, the internal temperature estimation unit 106 can predict a temperature change of the temperature distribution T_{bottom}(t) on the basis of the formula (8) described above.

After the internal temperature of the cooking object 12 is estimated in step S62, the process returns to step S6 in Fig. 4, and subsequent processing is performed.

### <Effector Control>

Details of control of the effector unit 23 performed in step S7 of Fig. 4 will be described. Contents of the control of the effector unit 23 lead to provision of a value to a cook. Examples of representative applications related to the control of the effector unit 23 will be described below.

### (A) Present Information about Heating Situation

The effector control unit 107 communicates with the information terminal 7 in Fig. 1 and presents a heating state of the cooking object 12 to a cook. For example, information visualizing temperature distributions of the cooking object 12 and the cooking utensil 11 is displayed on the display of the information terminal 7.

For example, the effector control unit 107 displays a surface temperature and an internal temperature of the cooking object 12 in real time from a free viewpoint on the basis of the three-dimensional model. The display of the surface temperature and the internal temperature is displayed in a manner similar to display of a result of thermal conduction analysis on a screen by a computer aided engineering (CAE) tool installed in a PC using CG.

There is a strong need to visualize not only a temperature distribution at a certain time but also a heat flow (temperature gradient in a time direction). Similar to visualizing a vector field with the CAE tool, the heat flow may be made visible. In addition to the current temperature distribution, a speed at which heat passes through a food material is presented, so that the cook can predict a change in the cooking object 12. The cooking assistance system assists the cook so as to enable appropriate heating control for obtaining an ideal finish.

Although an automatic adjustment function as described in (B) below is expected to evolve in the future, there are many cases where human skills are superior. Cooking in a work area may proceed while being at a remote location and receiving judgement and guidance from a skilled chef who has seen the presentation by the information terminal **7.** The information terminal 7 constituting the cooking assistance system is connected to the information processing apparatus 22 via an intranet or the Internet.

### (B) Automatic Adjustment of Heating Power

The effector control unit 107 communicates with the heating device 1 in Fig. 1 to automatically adjust heating power. In order to perform heating without unevenness, it is desirable to keep a temperature of a heating medium constant according to contents of cooking. For example, the effector control unit 107 adjusts the heating power of the heating device 1 by feedback control according to the temperature of the heating medium extracted in step S3.

Furthermore, as described later, a function of automatically stopping heating at a timing when it can be expected that a center temperature of the cooking object 12 reaches a target temperature by a simulation of a residual heat process is also useful.

### (C) Air Conditioning Control

There is a case where environmental conditions such as temperature and humidity of a cooking environment greatly affects a finish of a dish. In cooking of meat or fish, an operation of returning a temperature of a food material to normal temperature is performed as preliminary preparation. Unevenness in the temperature of the food material at the start of overheating directly leads to unevenness in a degree of cooking, and therefore it is important to keep the normal temperature (temperature in a room) constant.

Even in a residual heat process, a change in center temperature varies depending on temperature of a place where the meat is placed. Air conditioning control by a dedicated device specialized for a cooking environment is considered to be effective for accurately controlling heating conditions in search of reproducibility of a dish.

As feedback control based on temperature information measured by the thermographic camera 3, the effector control unit 107 controls operation setting of the air conditioner 8 so that a periphery of the cooking object 12 is in appropriate conditions.

Data measured by an auxiliary sensor including a sensor built in another device other than the basic sensor group, such as the heating device 1, may be used. For example, a thermometer or a hygrometer installed at a position where a vicinity of the cooking object 12 can be measured is provided as the auxiliary sensor.

A fragrance sensor may be provided as the auxiliary sensor. In a case of making a dish whose fragrance is important, it is essential to remove an excessive odor of environment by air conditioning for controlling a finish.

As described above, the effector control unit 107 controls at least one of the heating device 1, the information terminal 7, or the air conditioner 8, for example.

### (D) Storage of Recognition Data

Sensor data measured by the sensor unit 21 and information estimated by the information processing apparatus 22 may be stored in the storage unit 42 for post-analysis. That is, applications such as estimation results by the information processing apparatus 22 are not limited to heating control in real time. A physical configuration of the storage unit 42 is arbitrary so that the storage unit is included in the processor module 4 or provided in the server 6.

It is effective in a case where the sensor unit 21 includes a temperature sensor capable of accurately measuring an internal temperature of the cooking object 12. For example, a cooking thermometer using a thermocouple probe is provided as a component of the cooking utensil 11. The information processing apparatus 22 acquires data measured by the cooking thermometer and stores the data together with other sensor data in association with information of the estimation results. Reference to these pieces of information as Ground Truth information for estimation of the internal temperature is useful for development of a technical method for improving estimation accuracy of the internal temperature.

Furthermore, storing the RGB image acquired by the image sensor 33 together with the estimation result of the thermal conduction characteristic of the cooking object 12 by the thermal conduction characteristic estimation unit 105 is useful for verifying validity of the estimation result, and is useful for technological development for accuracy improvement.

With the above processing, in the cooking assistance system, the temperature of the portion to be heated of the cooking object 12, which is important for thermal conduction analysis, is accurately obtained on the basis of the thermal image acquired by the temperature sensor 31 without destroying the cooking object 12.

By using the accurately obtained temperature of the portion to be heated for estimation of the internal temperature, the cooking assistance system can estimate the internal temperature with high accuracy.

Furthermore, in the cooking assistance system, exposure of the portion to be heated of the cooking object 12 is recognized on the basis of the sensor data acquired by the sensor unit 21, and the contact thermal resistance between the portion to be heated and the heating medium is estimated on the basis of the thermal image acquired immediately after the exposure.

By using the contact thermal resistance for the estimation of the temperature of the portion to be heated, the cooking assistance system can improve estimation accuracy of the temperature of the portion to be heated and can estimate the internal temperature with high accuracy.

In the cooking assistance system, the three-dimensional model of the cooking object 12 is constructed on the basis of the sensor data acquired by the distance sensor 32, and temperature information to be the boundary condition and the initial condition of the thermal conduction analysis is mapped to the three-dimensional model.

By performing the thermal conduction analysis on the basis of the three-dimensional model reflecting the actual shape of the cooking object 12, the cooking assistance system can estimate the internal temperature with high accuracy. Furthermore, the cooking assistance system can also simulate a temperature change after heating is stopped using the same three-dimensional model.

### <<4. Others>>

### · Configuration Example of Computer

The series of processing described above can be executed by hardware or software. In a case where the series of processing is executed by the software, a program constituting the software is installed from a program recording medium to a computer incorporated in dedicated hardware, a general-purpose personal computer, or the like.

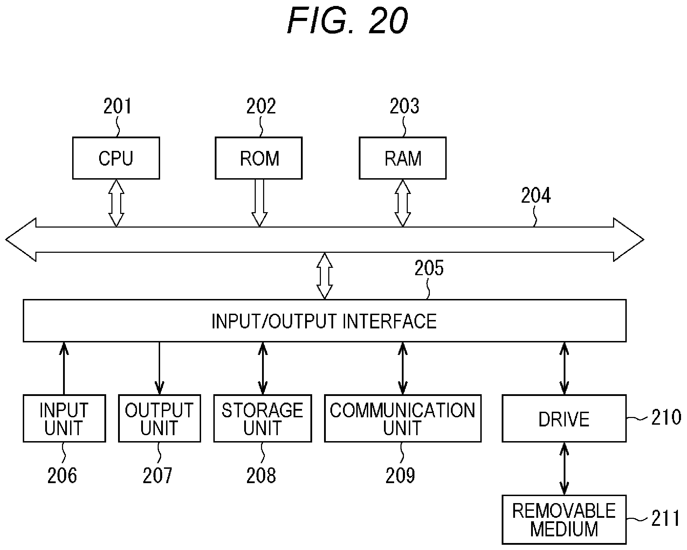

Fig. 20 is a block diagram illustrating a configuration example of hardware of a computer that executes the above-described series of processing by a program.

A central processing unit (CPU) 201, a read only memory (ROM) 202, and a random access memory (RAM) 203 are mutually connected by a bus 204.

Moreover, an input/output interface 205 is connected to the bus 204. An input unit 206 including a keyboard, a mouse, and the like, and an output unit 207 including a display, a speaker, and the like are connected to the input/output interface 205. Furthermore, a storage unit 208 including a hard disk, a nonvolatile memory, or the like, a communication unit 209 including a network interface or the like, and a drive 210 that drives a removable medium 211 are connected to the input/output interface 205.

In the computer configured as described above, for example, the CPU 201 loads a program stored in the storage unit 208 into the RAM 203 via the input/output interface 205 and the bus 204 and executes the program, whereby the above-described series of processing is performed.

The program executed by the CPU 201 is provided, for example, by being recorded in the removable medium 211 or via a wired or wireless transmission medium such as a local area network, the Internet, or digital broadcasting, and is installed in the storage unit 208.

Note that the program executed by the computer may be a program in which processing is performed in time series in the order described in the present specification, or may be a program in which processing is performed in parallel or at necessary timing such as when a call is made, and the like.

Note that, in the present specification, the system means a set of a plurality of components (devices, modules (parts), and the like), and it does not matter whether or not all the components are in the same housing. Therefore, a plurality of devices housed in separate housings and connected via a network, and one device housing a plurality of modules in one housing are both systems.

The effects described in the present specification are merely examples and are not limited, and there may be other effects.

An embodiment of the present technology is not limited to the above-described embodiment, and various modifications can be made without departing from the scope of the present invention as defined by the appended claims.

For example, the present technology can be configured as cloud computing in which one function is shared and jointly processed by a plurality of devices via a network.

Furthermore, each step described in the above-described flowcharts can be executed by one device or shared and executed by a plurality of devices.

Moreover, in a case where one step includes a plurality of processing, the plurality of processing included in the one step can be executed by one device or shared and executed by a plurality of devices.

### REFERENCE SIGNS LIST

- 1: Heating device
- 2: Stereo camera
- 3: Thermographic camera
- 4: Processor module
- 5: Network device
- 6: Server
- 7: Information terminal
- 8: Air conditioner
- 21: Sensor unit
- 22: Information processing apparatus
- 23: Effector unit
- 31: Temperature sensor
- 32: Distance sensor
- 33: Image sensor
- 41: Calculation unit
- 42: Storage unit
- 51: UI device
- 101: Sensor data input unit
- 102: Position and shape recognition unit
- 103: Surface temperature extraction unit
- 104: Process situation recognition unit
- 105: Thermal conduction characteristic estimation unit
- 106: Internal temperature estimation unit
- 107: Effector control unit

## Claims

1. An information processing apparatus comprising:
a construction unit configured to construct a three-dimensional model representing a shape and a temperature distribution of a cooking object on a basis of sensor data acquired by sensors configured to measure states of a cooking utensil and the cooking object; and
an internal temperature estimation unit (106) configured to estimate an internal temperature of the cooking object by performing thermal conduction analysis based on the three-dimensional model, and
a thermal conduction characteristic estimation unit (105) configured to estimate a thermal conduction characteristic of the cooking object on a basis of the sensor data, the thermal conduction characteristic being used for the thermal conduction analysis.

2. The information processing apparatus according to claim **1,** wherein
the construction unit is configured to construct the three-dimensional model in a case where the cooking object is put into the cooking utensil.

3. The information processing apparatus according to claim **1,** wherein
the construction unit is configured to reconstruct the three-dimensional model in a case where any one of a shape, volume, and posture of the cooking object changes in a cooking process.

4. The information processing apparatus according to claim **1,** wherein
the thermal conduction characteristic includes thermal conductivity, specific heat, density, and a thermal diffusion coefficient.

5. The information processing apparatus according to claim **1,** wherein
the thermal conduction characteristic estimation unit is configured to repeatedly update the thermal conduction characteristic in a cooking process.

6. The information processing apparatus according to claim **1,** further comprising:
an extraction unit configured to extract a surface temperature of the cooking object and a temperature of a heating medium on a basis of the sensor data.

7. The information processing apparatus according to claim **6,** wherein
the internal temperature estimation unit is configured to set the temperature of the heating medium as a temperature of a portion to be heated of the cooking object in the three-dimensional model, and estimates the internal temperature of the cooking object.

8. The information processing apparatus according to claim **6,** wherein
in a case where posture of the cooking object changes, the thermal conduction characteristic estimation unit is configured to estimate contact thermal resistance generated between the cooking object and the heating medium on a basis of the surface temperature of the cooking object and the temperature of the heating medium after the posture change, and
the internal temperature estimation unit is configured to estimate the internal temperature of the cooking object using the contact thermal resistance.

9. The information processing apparatus according to claim 8, wherein
the internal temperature estimation unit is configured to set, in the three-dimensional model, a temperature obtained on a basis of the contact thermal resistance, the surface temperature of the cooking object, and the temperature of the heating medium as a temperature of a portion to be heated of the cooking object, and the internal temperature estimation unit is configured to estimate the internal temperature of the cooking object.

10. The information processing apparatus according to claim 8, further comprising:
a recognition unit configured to recognize that the cooking object has been turned over as the posture change of the cooking object in a case where a change in surface temperature of the cooking object is larger than a threshold and a difference between the temperature of the heating medium and the surface temperature of the cooking object after the change is smaller than a threshold.

11. The information processing apparatus according to claim **1,** wherein
the internal temperature estimation unit is configured to estimate a representative value of the surface temperature of the cooking object as the internal temperature of the cooking object at a time of first construction of the three-dimensional model.

12. The information processing apparatus according to claim **1,** wherein
when the three-dimensional model is reconstructed, the internal temperature estimation unit is configured to estimate the internal temperature of the cooking object on a basis of internal energy in the three-dimensional model before the reconstruction.

13. An information processing method comprising:
constructing a three-dimensional model representing a shape and a temperature distribution of a cooking object on a basis of sensor data acquired by sensors that measure states of a cooking utensil and the cooking object;
estimating an internal temperature of the cooking object by performing thermal conduction analysis based on the three-dimensional model; and
estimating a thermal conduction characteristic of the cooking object on a basis of the sensor data, the thermal conduction characteristic being used for the thermal conduction analysis.

14. A computer program comprising instructions which, when the program is executed by a computer, cause the computer to carry out the method of claim 13.

## Patentansprüche

1. Informationsverarbeitungseinrichtung, die Folgendes umfasst:
eine Konstruktionseinheit, die dazu ausgelegt ist, ein dreidimensionales Modell, das eine Form und eine Temperaturverteilung eines Garguts repräsentiert, auf Basis von Sensordaten zu konstruieren, die durch Sensoren erfasst werden, die dazu ausgelegt sind, Zustände eines Garutensils und des Garguts zu messen; und
eine Innentemperaturschätzeinheit (106), die dazu ausgelegt ist, eine Innentemperatur des Garguts durch Durchführen einer Wärmeleitungsanalyse basierend auf dem dreidimensionalen Modell zu schätzen, und
eine Wärmeleitungscharakteristikschätzeinheit (105), die dazu ausgelegt ist, eine Wärmeleitungscharakteristik des Garguts auf Basis der Sensordaten zu schätzen, wobei die Wärmeleitungscharakteristik für die Wärmeleitungsanalyse verwendet wird.

2. Informationsverarbeitungseinrichtung nach Anspruch 1, wobei
die Konstruktionseinheit dazu ausgelegt ist, das dreidimensionale Modell in einem Fall zu konstruieren, dass das Gargut in das Garutensil gelegt wird.

3. Informationsverarbeitungseinrichtung nach Anspruch 1, wobei
die Konstruktionseinheit dazu ausgelegt ist, das dreidimensionale Modell in einem Fall zu rekonstruieren, dass sich ein beliebiges einer Form, eines Volumens und einer Lage des Garguts bei einem Garprozess ändert.

4. Informationsverarbeitungseinrichtung nach Anspruch 1, wobei
die Wärmeleitungscharakteristik eine Wärmeleitfähigkeit, eine spezifische Wärme, eine Dichte und einen Thermodiffusionskoeffizienten beinhaltet.

5. Informationsverarbeitungseinrichtung nach Anspruch 1, wobei
die Wärmeleitungscharakteristikschätzeinheit dazu ausgelegt ist, die Wärmeleitungscharakteristik bei einem Garprozess wiederholt zu aktualisieren.

6. Informationsverarbeitungseinrichtung nach Anspruch 1, die ferner Folgendes umfasst:
eine Extrahierungseinheit, die dazu ausgelegt ist, eine Oberflächentemperatur des Garguts und eine Temperatur eines Heizmediums auf Basis der Sensordaten zu extrahieren.

7. Informationsverarbeitungseinrichtung nach Anspruch 6, wobei
die Innentemperaturschätzeinheit dazu ausgelegt ist, die Temperatur des Heizmediums als eine Temperatur eines zu erwärmenden Teils des Garguts in dem dreidimensionalen Modell einzustellen, und die Innentemperatur des Garguts schätzt.

8. Informationsverarbeitungseinrichtung nach Anspruch 6, wobei
in einem Fall, dass sich eine Lage des Garguts ändert, die Wärmeleitungscharakteristikschätzeinheit dazu ausgelegt ist, einen zwischen dem Gargut und dem Heizmedium erzeugten thermischen Kontaktwiderstand auf Basis der Oberflächentemperatur des Garguts und der Temperatur des Heizmediums nach der Lageänderung zu schätzen, und
die Innentemperaturschätzeinheit dazu ausgelegt ist, die Innentemperatur des Garguts unter Verwendung des thermischen Kontaktwiderstands zu schätzen.

9. Informationsverarbeitungseinrichtung nach Anspruch 8, wobei
die Innentemperaturschätzeinheit dazu ausgelegt ist, in dem dreidimensionalen Modell eine auf Basis des thermischen Kontaktwiderstands, der Oberflächentemperatur des Garguts und der Temperatur des Heizmediums erhaltene Temperatur als eine Temperatur eines zu erwärmenden Teils des Garguts einzustellen, und die Innentemperaturschätzeinheit dazu ausgelegt ist, die Innentemperatur des Garguts zu schätzen.

10. Informationsverarbeitungseinrichtung nach Anspruch 8, die ferner Folgendes umfasst:
eine Erkennungseinheit, die dazu ausgelegt ist, in einem Fall ein Umdrehen des Garguts als die Lageänderung des Garguts zu erkennen, dass eine Änderung der Oberflächentemperatur des Garguts größer als ein Schwellenwert ist und eine Differenz zwischen der Temperatur des Heizmediums und der Oberflächentemperatur des Garguts nach der Änderung kleiner als ein Schwellenwert ist.

11. Informationsverarbeitungseinrichtung nach Anspruch 1, wobei
die Innentemperaturschätzeinheit dazu ausgelegt ist, zu einem Zeitpunkt einer ersten Konstruktion des dreidimensionalen Modells einen repräsentativen Wert der Oberflächentemperatur des Garguts als die Innentemperatur des Garguts zu schätzen.

12. Informationsverarbeitungseinrichtung nach Anspruch 1, wobei
wenn das dreidimensionale Modell rekonstruiert wird, die Innentemperaturschätzeinheit dazu ausgelegt ist, vor der Rekonstruktion die Innentemperatur des Garguts auf Basis einer inneren Energie in dem dreidimensionalen Modell zu schätzen.

13. Informationsverarbeitungsverfahren, das Folgendes umfasst:
Konstruieren eines dreidimensionalen Modells, das eine Form und eine Temperaturverteilung eines Garguts repräsentiert, auf Basis von Sensordaten, die durch Sensoren erfasst werden, die Zustände eines Garutensils und des Garguts messen;
Schätzen einer Innentemperatur des Garguts durch Durchführen einer Wärmeleitungsanalyse basierend auf dem dreidimensionalen Modell; und
Schätzen einer Wärmeleitungscharakteristik des Garguts auf Basis der Sensordaten, wobei die Wärmeleitungscharakteristik für die Wärmeleitungsanalyse verwendet wird.

14. Computerprogramm, das Anweisungen umfasst, die bei Ausführung des Programms durch einen Computer den Computer dazu veranlassen, das Verfahren nach Anspruch 13 auszuführen.

## Revendications

1. Appareil de traitement d'informations comprenant :
une unité de construction configurée pour construire un modèle tridimensionnel représentant une forme et une distribution de température d'un objet de cuisson sur la base de données de capteur acquises par des capteurs configurés pour mesurer des états d'un ustensile de cuisson et de l'objet de cuisson ; et
une unité d'estimation de température interne (106) configurée pour estimer une température interne de l'objet de cuisson en réalisant une analyse de conduction thermique basée sur le modèle tridimensionnel, et
une unité d'estimation de caractéristique de conduction thermique (105) configurée pour estimer une caractéristique de conduction thermique de l'objet de cuisson sur la base des données de capteur, la caractéristique de conduction thermique étant utilisée pour l'analyse de conduction thermique.

2. Appareil de traitement d'informations selon la revendication 1,
l'unité de construction étant configurée pour construire le modèle tridimensionnel dans un cas où l'objet de cuisson est placé dans l'ustensile de cuisson.

3. Appareil de traitement d'informations selon la revendication 1,
l'unité de construction étant configurée pour reconstruire le modèle tridimensionnel dans un cas où l'un quelconque d'une forme, d'un volume et d'une posture de l'objet de cuisson change au cours d'un processus de cuisson.

4. Appareil de traitement d'informations selon la revendication 1,
la caractéristique de conduction thermique comprenant la conductivité thermique, la chaleur spécifique, la densité et un coefficient de diffusion thermique.

5. Appareil de traitement d'informations selon la revendication 1,
l'unité d'estimation de caractéristique de conduction thermique étant configurée pour mettre à jour de manière répétée la caractéristique de conduction thermique dans un processus de cuisson.

6. Appareil de traitement d'informations selon la revendication 1, comprenant en outre
une unité d'extraction configurée pour extraire une température de surface de l'objet de cuisson et une température d'un milieu chauffant sur la base des données de capteur.

7. Appareil de traitement d'informations selon la revendication 6,
l'unité d'estimation de température interne étant configurée pour régler la température du milieu chauffant en tant que température d'une partie à chauffer de l'objet de cuisson dans le modèle tridimensionnel, et pour estimer la température interne de l'objet de cuisson.

8. Appareil de traitement d'informations selon la revendication 6,
dans le cas où la posture de l'objet de cuisson change, l'unité d'estimation de caractéristique de conduction thermique étant configurée pour estimer la résistance thermique de contact générée entre l'objet de cuisson et le milieu chauffant sur la base de la température de surface de l'objet de cuisson et de la température du milieu chauffant après le changement de posture, et l'unité d'estimation de température interne étant configurée pour estimer la température interne de l'objet de cuisson au moyen de la résistance thermique de contact.

9. Appareil de traitement d'informations selon la revendication 8,
l'unité d'estimation de température interne étant configurée pour régler, dans le modèle tridimensionnel, une température obtenue sur la base de la résistance thermique de contact, de la température superficielle de l'objet de cuisson et de la température du milieu chauffant en tant que température d'une partie à chauffer de l'objet de cuisson, et l'unité d'estimation de température interne étant configurée pour estimer la température interne de l'objet de cuisson.

10. Appareil de traitement d'informations selon la revendication 8, comprenant en outre
une unité de reconnaissance configurée pour reconnaître que l'objet de cuisson a été retourné en tant que changement de posture de l'objet de cuisson dans le cas où un changement de température de surface de l'objet de cuisson est supérieur à un seuil et où une différence entre la température du milieu chauffant et la température de surface de l'objet de cuisson après le changement est inférieure à un seuil.

11. Appareil de traitement d'informations selon la revendication 1,
l'unité d'estimation de température interne étant configurée pour estimer une valeur représentative de la température de surface de l'objet de cuisson en tant que température interne de l'objet de cuisson au moment de la première construction du modèle tridimensionnel.

12. Appareil de traitement d'informations selon la revendication 1,
lors de la reconstruction du modèle tridimensionnel, l'unité d'estimation de température interne étant configurée pour estimer la température interne de l'objet de cuisson à partir de l'énergie interne dans le modèle tridimensionnel avant la reconstruction.

13. Procédé de traitement d'informations comprenant :
la construction d'un modèle tridimensionnel représentant une forme et une distribution de température d'un objet de cuisson à partir de données de capteur acquises par des capteurs mesurant des états d'un ustensile de cuisson et l'objet de cuisson ;
l'estimation d'une température interne de l'objet de cuisson en réalisant une analyse de conduction thermique basée sur le modèle tridimensionnel ; et
l'estimation d'une caractéristique de conduction thermique de l'objet de cuisson sur la base des données de capteur, la caractéristique de conduction thermique étant utilisée pour l'analyse de conduction thermique.

14. Programme informatique comprenant des instructions qui, lorsque le programme est exécuté par un ordinateur, amènent l'ordinateur à réaliser le procédé selon la revendication 13.
